# EUROPEAN PATENT SPECIFICATION

(11) **EP 2 825 046 B1**
(45) Date of publication and mention of the grant of the patent: **09.03.2016**
(21) Application number: 13708441.4
(22) Date of filing: 11.03.2013
(51) Int. Cl.: A01N 53/00, A01N 25/02, A01N 25/00

(54) **LIQUID CONCENTRATE FORMULATION CONTAINING A PYRIPYROPENE INSECTICIDE III**
FLÜSSIGKONZENTRATFORMULIERUNG MIT EINEM PYRIPYROPEN-INSEKTIZID III
FORMULATION CONCENTRÉE LIQUIDE CONTENANT UN INSECTICIDE PYRIPYROPÈNE III

(30) Priority: 13.03.2012 US 201261609965 P
(43) Date of publication of application: 21.01.2015
(73) Proprietor: BASF SE, 67056 Ludwigshafen (DE)
(72) Inventor: XU, Wen, Cary, North Carolina 27519 (US); POHLMAN, Matthias, 67251 Freinsheim (DE)
(86) International application number: PCT/EP2013/054836
(87) International publication number: WO 2013/135610

(56) References cited:
- EP-A1- 2 107 060
- EP-A1- 2 223 599

## Description

The present invention relates to a liquid concentrate formulation comprising a pyripyropene pesticide of the formula I as defined below and an alkoxylated aliphatic alcohol as an adjuvant. Moreover, the invention relates to the use of the formulations for the treatment of plants and seed and to corresponding methods.

The pyripyropene derivative of formula I 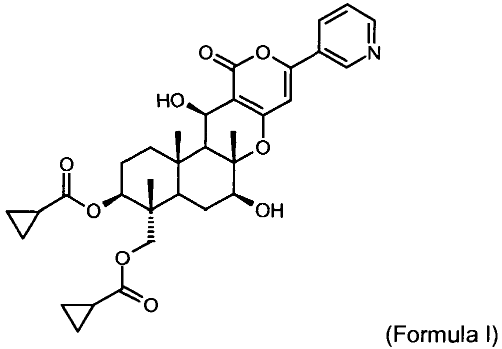 is known from WO 2009/081851 (compound no. 4) as exhibiting insecticidal activity and being useful for crop protection. In particular, WO 2009/081851 discloses various agrochemical formulations of the pyripyropene derivative I and suitable additives for such formulations.

Agrochemical formulations of pyripyropene derivatives including suitable additives are also disclosed in EP 2 119 361 and EP 1 889 540. The pyripyropene derivative I may be prepared by the process described in WO 2006/129714 or EP 2 186 815.

Active ingredients are often formulated in the form of solutions of the active ingredient in an aromatic hydrocarbon or hydrocarbon mixture containing surfactants, which stabilize the emulsion upon dilution with water.

One problem associated with liquid formulations of the pyripyropene derivative of formula I, is their low stability. In particular when trying to provide agricultural formulations comprising the pyripyropene derivative I solubilized in an aromatic hydrocarbon solvent, the formation of a crystalline material is observed upon storage. As the crystalline matter separates as solid material from the solution, dosage problems and clogging of spraying apparatus may occur. Without being bound to theory, it is believed that the pyripyropene derivative I forms sparingly soluble solvate complexes with the aromatic solvent that is contained in the formulation.

In addition, polyalkoxylated alcohols (herein also called alkoxylated alcohols) have been demonstrated to significantly enhance the insecticidal activity of pyripyropene derivative I (see WO 2012/035015) and are therefore highly desirable adjuvants to be included in formulations of the pyripyropene derivative I. However, dependent on the solvent, polyalkoxylated alcohols may interfere with the solubilization of the pyripyropene derivative I and may therefore not be compatible with certain aromatic solvents and emulsifiers.

Accordingly, it is an object of the present invention to provide stable liquid concentrate formulations of pyripyropene derivative I which besides an aromatic hydrocarbon solvent or solvent mixture also contain an activity enhancing polyalkoxylated alcohol as adjuvant and which have advantageous properties for applications in invertebrate pest control. The formulations should especially have high stability even after prolonged periods of storage and should not form crystalline material. It is therefore a particular object of the present invention to provide an additive that prevents crystallization of the pyripyropene derivative I in its liquid concentrate formulations which contain an aromatic hydrocarbon solvent, so as to prevent phase separation and allow for homogeneous and stable formulations.

The inventors of the present invention found that a certain group of non-ionic surfactants S which are selected from the group consisting of C₂-C₃-_{P}olyalkoxylates of C₁₀-C₂₂-hydroxy fatty acid triglycerides and C₂-C₃-polyalkoxylates of C₁₀-C₂₂-fatty acid mono- or diclycerides suppress the formation of crystalline material. They also found that certain ketones suppress the formation of crystalline material in liquid concentrate formulations of pyripyropene derivative I, which contain an aromatic hydrocarbon solvent, in particular in combination with the surfactant S.

Accordingly, the present invention provides a liquid concentrate formulation comprising
a) 0.5 to 30 wt%, based on the total weight of the formulation, of a compound of formula I; 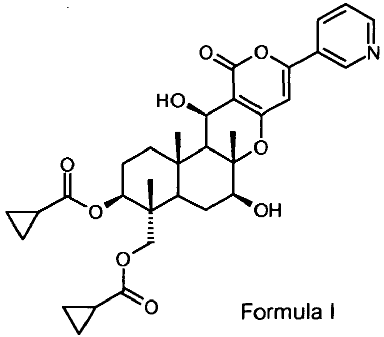
b) 20 to 80 wt%, based on the total weight of the formulation, of an aromatic hydrocarbon solvent or aromatic hydrocarbon solvent mixture,
c) 10 to 50 wt%, based on the total weight of the formulation, of at least one alkoxylated aliphatic alcohol of formula (A)

   R^{a}-O-(CₘH₂ₘO)ₓ-(CₙH₂ₙO)_{y}-(CₚH₂ₚO)_{z}-R^{b} (A)

   in which
   R^{a} represents C₈-C₃₆-alkyl, C₈-C₃₆-alkenyl or a mixture thereof;
   R^{b} represents H or C₁₋C₁₂-alkyl;
   m, n, p represent, independently of one another, an integer from 2 to 16;
   x, y, z represent, independently of one another, a number from 0 to 50; and
   x+y+z corresponds to a value from 2 to 50,
   further comprising
d) at least one anionic surfactant, and
e) at least one non-ionic surfactant S which is selected from the group consisting of C₂-C₃-polyalkoxylatés of C₁₀-C₂₂-hydroxy fatty acid triglycerides and C₂-C₃-polyalkoxylates of C₁₀-C₂₂-fatty acid mono- or diclycerides.

The term wt%, as used herein, has to be understood as % by weight.

The invention also relates to aqueous ready-to-use preparations obtained by diluting liquid concentrate formulations according to the invention with water.

Further subject matters of the present invention relate to the uses of the formulations according to the invention or ready-to-use preparations derived therefrom for combating or controlling invertebrate pests and for protecting growing plants from attack or infestation by invertebrate pests.

Accordingly, further subject matters are a method for protecting plants from attack or infestation by invertebrate pests, such as insects, acarids or nematodes, which method comprises contacting the plant, or the soil or water in which the plant is growing, with said formulation or said ready-to-use preparation in pesticidally effective amounts; a method for controlling invertebrate pests comprising contacting an invertebrate pest or their food supply, habitat, breeding grounds or their locus with said formulation or said ready-to-use preparation in pesticidally effective amounts; a method for protection of plant propagation material comprising contacting the plant propagation material, preferably seeds, with said formulation or said ready-to-use preparation in pesticidally effective amounts; and finally seed, comprising said composition.

The invention has a number of advantages. Thus, the formulations according to the invention are homogeneous formulations which are stable for prolonged storage periods even at extreme temperatures of down to -20°C, without loosing their advantageous properties. The formulations of the invention can be easily diluted wit water to form stable dilutions in the form of an aqueous suspension or emulsion of the pyripyropene derivative I, without formation of phase separation such as creaming or sedimentation. Apart from that the formulations of the invention provide increased pesticidal activity.

In the context of the present invention, the terms used generically are defined as follows:
The prefix Cₓ-C_{y} denotes the number of possible carbon atoms in the particular case.

The term "alkyl" refers to saturated straight-chain, branched or cyclic hydrocarbon radicals having generally from 1 to 36 carbon atoms, e.g. methyl, ethyl, propyl, 1-methylethyl (isopropyl), butyl, 1-methylpropyl (sec-butyl), 2-methylpropyl (isobutyl), 1,1-dimethylethyl (tert-butyl), pentyl, 1-methylbutyl, 2-methylbutyl, 3-methylbutyl, 2,2-dimethylpropyl, 1-ethylpropyl, cyclopentyl, hexyl, 1-methylpentyl, n-heptyl, n-octyl, 2-ethylhexyl, n-nonyl, n-decyl, 1-methylnonyl, 2-propylheptyl, n-dodecyl, 1-methyldodecyl, n-tridecyl, n-tetradecyl, n-pentadecyl, n-hexadecyl, n-heptadecyl, n-octadecyl, n-nonadecyl, n-eicosyl, and the like.

The term "alkenyl" as used herein denotes in each case a singly unsaturated hydrocarbon radical having from generally 1 to 36 carbon atoms, e.g. vinyl, allyl (2-propen-1-yl), 1-propen-1-yl, 2-propen-2-yl, methallyl (2-methylprop-2-en-1-yl), 2-buten-1-yl, 3-buten-1-yl, 2-penten-1-yl, 3-penten-1-yl, 4-penten-1-yl, 1-methylbut-2-enyl, hex-2-enyl, 1-methylpent-2-enyl, hep-2-entyl, oct-4-enyl, 2-ethylhex-2-enyl, non-3-enyl, dec-4-enyl, 1-methylnon-3-enyl, 2-propylhept-3-enyl, dodec-2-enyl, 1-methyldodec-3-enyl, tridec-6-enyl, tetradec-4-enyl, pentade-2-encyl, hexadec-6-enyl, heptadec-8-enyl, octadec-2enyl, nonadec-3-enyl, and the like.

The terms "fatty acid", "fatty alcohol", "fatty amine" and "fatty amide" refer to alkanoic acids, alkanols, alkylamines or alkanoic amides having generally from 6 to 30, in particular from 8 to 22 carbon atoms and wherein the saturated alkyl radical may be linear or branched.

The term "C₂-C₄-alkylene" refers to saturated, divalent straight-chain or branched hydrocarbon radicals having 2, 3, or 4 carbon atoms, such as, for example, ethane-1,2-diyl, propane-1,3-diyl, propane-1,2-diyl, 2-methylpropane-1,2-diyl, butane-1,4-diyl, butane-1,3-diyl (= 1-methylpropane-1,3-diyl), butane-1,2-diyl and butane-2,3-diyl.

The terms "alkoxylated", "ethoxylated", "polyoxyalkylene" or "polyoxyethylene", respectively, mean that OH-functions have been reacted with ethylene oxide or C₂-C₄-alkylene oxide to form a oligoalkylene oxide (= polyoxyalkylene) or oligoethylene oxide (= polyoxyethylene) group. The degree of alkoxylation or ethoxylation (number average of alkylene oxide or ethylene oxide repeating units) will usually be in the range from 1 to 50 and in particular from 2 to 40 more preferably from 2 to 30.

The term "aryl" refers to aromatic radicals including carbocyclic aromatic radicals such as, for example, phenyl, naphthyl, anthracenyl, and heteroaromatic radicals having generally 1 or 2 heteroatoms selected from the group consisting of O and N, such as, for example, pyridyl, pyrryl, pyrazinyl, pyrimidinyl, purinyl, indolyl, quinolyl, isoquinolyl, imidazolyl, pyrazolyl, indazolyl, furyl, benzofuryl, isobenzofuryl, morpholinyl, oxazolyl, benzoxazolyl, isoxazolyl and benzisoxazolyl.

The liquid concentrate formulations according to the invention comprise an aromatic hydrocarbon solvent or a mixture of such aromatic hydrocarbons. Suitable aromatic hydrocarbons in this context are those having a boiling point of from 100 to 310°C which are preferably selected from mono- and polycyclic aromatics that are optionally substituted with one or more aliphatic or araliphatic substituents, in particular alkyl or arylalkyl radicals. According to a preferred embodiment of the invention the formulations comprise mixtures of those aromatic hydrocarbons which are obtained as fractions in the distillation of, in particular, mineral oil products in the abovementioned boiling point range, such as the commercially available products which are known by the trade names Solvesso® (ExxonMobil Chemical), in particular Solvesso® 100, Solvesso® 150, Solvesso® 200, Solvesso® 150 ND, Solvesso® 200 ND, Aromatic® (ExxonMobil Chemical), in particular Aromatic® 150, Aromatic® 200, Aromatic® 150 ND and Aromatic® 200 ND, Hydrosol® (DHC Solvent Chemie), in particular Hydrosol® A 200 and Hydrosol® A 230/270, Caromax^{®} (Petrochem Carless), in particular Caromax^{®} 20 and Caromax^{®} 28, Aromat K (K. H. Klink Chemierohstoffe), in particular Aromat K 150, Aromat K 200, Shellsol® (Shell Chemicals), in particular Shellsol® A 100 and Shellsol® A 150, and Fin FAS-TX, in particular Fin FAS-TS 150 and Fin FAS-TX 200. Particular preference is given to Aromatic® 200 ND and Solvesso® 200 ND, in which the potential carcinogen naphthalene has been depleted. Aromatic® 200 ND and Solvesso® 200 ND both comprise mainly aromatic hydrocarbons having 10 to 14 carbons which boil in the range 240 to 300°C and which are in particular alkylnaphthalenes.

The inventive liquid concentrate formulations comprise the aromatic hydrocarbon solvent or a mixture of such solvents in an amount of 20 to 80 wt%, based on the total weight of the formulation. Generally, the amount of aromatic hydrocarbon solvent comprised in the formulations of the invention may vary and depends in each individual case on the amounts of the pyripyropene derivative I, the alkoxylated aliphatic alcohol A, the anionic surfactant, the non-ionic surfactant S and optional further ingredients, and also their properties. The weight ratio of aromatic hydrocarbon solvent to the amount of the pyripyropene derivative I is usually in the range from 0.3 : 1 to 100 : 1, preferably from 1 : 1 to 60 : 1, in particular from 2 : 1 to 40 : 1, and specifically from 3 : 1 to 20 : 1. Based on the total weight of the formulations, the proportion of aromatic hydrocarbon solvent is preferably from 25 to 75% by weight, in particular from 30 to 70% by weight and specifically from 40 to 70% by weight.

The formulations according to the invention comprise at least one alkoxylated aliphatic alcohol of the formula (A), hereinafter also termed as alkoxylate A,

R^{a} -O-(CₘH₂ₘO)ₓ-(CₙH₂ₙO)_{y}-(CₚH₂ₚO)_{z}-R^{b} (A)

in which
- R^{a}: represents C₈-C₃₆-alkyl, C₈-C₃₆-alkenyl or a mixture thereof, preferably C₁₀-C₃₂-alkyl, C₁₀-C₃₂-alkenyl, or a mixture thereof, more preferably C₁₄-C₂₅-alkyl, C₁₄-C₂₆-alkenyl, or a mixture thereof, in particular C₁₅-C₂₀-alkyl, C₁₅-C₂₀-alkenyl, or a mixture thereof;
- R^{b}: represents H or C₁-C₁₂-alkyl, in particular H or C₁-C₄-alkyl, preferably H or methyl, especially H;
- m, n, p: represent, independently of one another, an integer from 2 to 16, preferably an integer from 2 to 5, more preferably an integer 2 or 3 (i.e. all of m, n, p are either 2 or 3, or one of m, n, p is 2 and the remaining two are both 3, or one of m, n, p is 3 and remaining two are both 2), specifically one of m, n, p is 2 and the remaining two are both 3 or one of m, n, p is 3 and the remaining two are both 2;
- x, y, z: represent, independently of one another, a number from 0 to 50, preferably a number from 0 to 30, more preferably from 0 to 20; and
- x+y+z: corresponds to a value from 2 to 50, preferably from 5 to 50, more preferably from 10 to 30 and in particular from 12 to 20.

The term "alkoxylated" in this context means that the OH moiety of the aliphatic alcohol has been replaced by a polyoxyalkylene or polyalkylene oxide moiety. Polyoxyalkylene, in terms of the present invention, is an aliphatic polyether radical which is build from alkylene oxide repeating units A-O, where A is alkandiyl, in particular C₂-C₅-alkandiyl. Polyoxyalkylene, in terms of the present invention, is preferably a poly-C₂-C₅-alkylene oxide moiety, more preferably a poly-C₂-C₄-alkylene oxide moiety, especially a poly-C₂-C₃-alkylene oxide moiety, e.g. a polyethylene oxide moiety, a polypropylene oxide moiety, a poly(ethylene oxide-co-propylene oxide) moiety, a poly(ethylene oxide-co-butylene oxide) moiety or a poly(ethylene oxide-co-pentylene oxide) moiety. The number of alkylene oxide repeating units in the polyoxyalkylene radical is generally from 1 to 100 or from 2 to 100, preferably from 5 to 40, more preferably from 10 to 30 and in particular from 12 to 20.

The variable R^{a} of the at least one alkoxylate A may be linear or branched, preferably it is linear. R^{a} may be saturated or unsaturated, preferably it is saturated. R^{a} may be substituted or unsubstituted, preferably it is unsubstituted. Preferably, R^{a} represents linear C₈-C₃₆-alkyl, C₈-C₃₆-alkenyl, or a mixture thereof. More preferably, R^{a} represents linear C₁₄-C₃₆-alkyl, C₁₄-C₃₆-alkenyl, or a mixture thereof, in particular linear C₁₄-C₂₆-alkyl, C₁₄-C₂₆-alkenyl, or mixture thereof. Even more preferably, R^{a} represents a linear C₁₄-C₂₂-alkyl, or a mixture thereof. Especially preferred, R^{a} represents a linear C₁₆-C₂₀-alkyl, or a mixture thereof.

R^{b} represents preferably H or methyl, in particular H.

Preferably, m, n, p represent, independently of one another, an integer from 2 to 5, more preferably an integer 2 or 3, specifically one of m, n, p is 2 and the remaining two are both 3 or one of m, n, p is 3 and the remaining two are both 2.

Preferably, x, y, z represent, independently of one another, a number from 0 to 30, more preferably from 0 to 20. Preferably, the sum x+y+z corresponds to a value from 5 to 50, more preferably from 10 to 30, more preferably from 8 to 25, and in particular from 12 to 20.

According to a particular embodiment, alcohol alkoxylates of the formula (A) are used in which m = 2 and the value of x is greater than zero. This relates to alcohol alkoxylates of the EO type to which belong especially alcohol ethoxylates (m = 2; x > zero; y and z = zero) and alcohol alkoxylates with an EO block bonded to the alcohol portion that include further alkylene oxide moieties (m = 2; x > zero; y and/or z > zero). As regards to the latter compounds, mention may also be made of EO-PO block alkoxylates (m = 2; x > zero; y > zero; n = 3; z = 0), EO-PeO block alkoxylates (m = 2; x > zero; y > zero; n = 5; z = 0) and EO-PO-EO block alkoxylates (m, p = 2; x, z > zero; y > zero; n = 3). In particular preferred are EO-PO block alkoxylates (m = 2; x > zero; y > zero; n = 3; z = 0).

Here and in the following EO represents CH₂CH₂O, PO represents CH(CH₃)CH₂O or CH₂CH(CH₃)O, BuO represents CH(C₂H₅)CH₂O, C(CH₃)₂CH₂O, CH₂C(CH₃)₂O CH(CH₃)CH(CH₃)O or CH₂CH(C₂H₅)O and PeO represents (C₅H₁₀O).

In this context preference is given to EO-PO block alkoxylates in which the ratio of EO to PO (x to y) is 10:1 to 1:15, preferably 1:1 to 1:12 and in particular 1:2 to 1:8, with the degree of ethoxylation (value of x) being generally 1 to 20, preferably 2 to 15 and in particular 2 to 10 and the degree of propoxylation (value of y) being generally 1 to 30, preferably 4 to 20 and in particular 8 to 16. The overall degree of alkoxylation, i.e. the sum of EO and PO units, is generally 2 to 50, preferably 4 to 30 and in particular 6 to 20.

In this context preference is furthermore given to EO-PeO block alkoxylates in which the ratio of EO to PeO (x to y) is 2:1 to 25:1 and in particular 4:1 to 15:1, with the degree of ethoxylation (value of x) being generally 1 to 50, preferably 4 to 25 and in particular 6 to 15 and the degree of pentoxylation (value of y) being generally 0.5 to 20, preferably 0.5 to 4 and in particular 0.5 to 2. The overall degree of alkoxylation, i.e. the sum of EO and PeO units, is generally 1.5 to 70, preferably 4.5 to 29 and in particular 6.5 to 17.

According to a further particular embodiment, alcohol alkoxylates of the formula (A) are used in which n = 2, the values of x and y are both greater than zero and z = 0. This relates to alcohol alkoxylates of the EO type in which the EO block is terminally bonded. These include especially PO-EO block alkoxylates (n = 2; x > zero; y > zero; m = 3; z =0) and PeO-EO block alkoxylates (n = 2; x > zero; y > zero; m = 5; z = 0).

In this context preference is given to PO-EO block alkoxylates in which the ratio of PO to EO (x to y) is 1:10 to 15:1, preferably 1:1 to 12:1 and in particular 2:1 to 8:1, with the degree of ethoxylation (value of y) being generally 1 to 20, preferably 2 to 15 and in particular 2 to 10, and the degree of propoxylation (value of x) being generally 0.5 to 30, preferably 4 to 20 and in particular 6 to 16. The overall degree of alkoxylation, i.e. the sum of EO and PO units, is generally 1.5 to 50, preferably 2.5 to 30 and in particular 8 to 20.

In this context preference is also given to PeO-EO block alkoxylates in which the ratio of PeO to EO (x to y) is 1:50 to 1:3 and in particular 1:25 to 1:5, with the degree of pentoxylation (value of x) being generally 0.5 to 20, preferably 0.5 to 4 and in particular 0.5 to 2 and the degree of ethoxylation (value of y) being generally 3 to 50, preferably 4 to 25 and in particular 5 to 15. The overall degree of alkoxylation, i.e. the sum of EO and PeO units, is generally 3.5 to 70, preferably 4.5 to 45 and in particular 5.5 to 17.

In an especially preferred embodiment the alkoxylate is selected from alkoxylated alcohols of the formula (A), in which
R^{a} represents linear C₁₂-C₂₂-alkyl, especially linear C₁₀-C₂₀ alkyl or a mixture thereof;
R^{b} represents H or C₁-C₄-alkyl, preferably H or methyl, in particular H;
m, n, p represent, independently of one another, an integer from 2 to 5, preferably 2 or 3;
x, y, z represent, independently of one another, a number from 0 to 50; and
x+y+z corresponds to a value from 5 to 50, preferably from 8 to 25.

The wetting power by immersion of the alkoxylate is usually at least 120 seconds, preferably at least 180 s, especially at least 220 s. The wetting power is usually analyzed according to DIN 1772 at room temperature at 1 g/L in 2 g/l sodium carbonate.

The surface tension of the alkoxylate is usually at least 30 mN/m, preferably at least 31 mN/m, and in particular at least 32 mN/m. Furtheron, the surface tension is preferably from 30 to 40 mN/m, and in particular from 30 to 35 mN/m. The surface tension may be analyzed according to DIN 14370 at room temperature at 1 g/L.

Preferably, the alkoxylate has a wetting power by immersion of at least 120 s and a surface tension of at least 30 mN/m. More preferably, the alkoxylate has a wetting power by immersion of at least 180 s and a surface tension from 30 to 40 mN/m.

Alkoxylates are known and may be prepared by known methods, such as WO 98/35553, WO 00/35278 or EP 0 681 865. Many alkoxylates are commercially available, for example Atplus® 242, Atplus® 245, Atplus® MBA 1303 from Croda, Plurafac® LF types from BASF SE, Agnique® BP 24-24, Agnique® BP 24-36, Agnique® BP 24-45, Agnique® BP 24-54, Agnique® BP24-52R from Cognis.

The liquid concentrate formulations according to the invention comprise the at least one alkoxylate A typically in an amount of 10 to 50 wt%, based on the total weight of the formulation. Generally, the amount of alkoxylate A comprised in the formulations of the invention depends in each individual case on the amounts of the pyripyropene derivative I, the aromatic hydrocarbon solvent, the anionic surfactant, the non-ionic surfactant S and optional further ingredients, and also their properties. The weight ratio of alkoxylate A to the amount of the pyripyropene derivative I is usually in the range from 1 : 2 to 50 : 1, preferably from 1 : 1 to 30 : 1, in particular from 1 : 1 to 15 : 1, and specifically from 2 : 1 to 10 : 1. Based on the total weight of the formulations, the proportion of alkoxylate A is preferably from 10 to 40% by weight and in particular from 15 to 30% by weight.

The formulations according to the invention also comprise at least one anionic surfactant and at least one non-ionic surfactant S. The term surfactant refers to surface-active substances, which are also referred to as emulsifiers or detergents.

Suitable anionic surfactants in this context are, in principle, all anionic surfactants typically used for stabilizing aqueous o/w emulsions. These are generally organic compounds having a hydrophobic radical, typically a hydrocarbon radical having 6 to 40, frequently 6 to 30 and in particular 8 to 22, carbon atoms and at least one functional group which, in aqueous media, is present in anionic form, for example a carboxylate, sulfonate, sulfate, phosphonate, phosphate, hydrogenphosphate or dihydrogenphosphate group. If appropriate, the anionic surfactants additionally have a poly-C₂-C₃-alkylene ether group, in particular a polyethylene oxide group having 1 to 50, in particular 2 to 30, C₂-C₃-alkylene oxide repeat units, in particular ethylene oxide repeat units.

Preferred anionic surfactants are those having at least one SO₃ group (sulfate and/or sulfonate) or one PO₄ group (phosphate group). From among these, preference is given to those anionic surfactants having at least one and in particular one aliphatic hydrocarbon radical having 8 to 22 carbon atoms or one araliphatic hydrocarbon radical having 10 to 26 carbon atoms. Such anionic surfactants are typically employed in the form of their alkali metal, alkaline earth metal or ammonium salts, in particular in the form of their sodium, potassium, calcium or ammonium salts. Here and below, the term "aliphatic" is meant to include alkyl, alkenyl and alkadienyl and preferably denotes alkyl. The term "aralkyl" denotes an aromatic hydrocarbon radical, such as phenyl or naphthyl, and preferably denotes phenyl having one or more, in particular one, alkyl group.

Examples of such anionic surfactants are:
c.1. C₈-C₂₂-alkylsulfonates, such as laurylsulfonate and isotridecylsulfonate;
c.2. C₈-C₂₂-alkyl sulfates, such as lauryl sulfate, isotridecyl sulfate, cetyl sulfate and stearyl sulfate;
c.3. aryl- and C₁-C₂₂-alkylarylsulfonates, e.g. naphthalenesulfonate, mono-,di- and tri-C₁-C₁₆-alkylnaphthylsulfonates such as dibutylnaphtylsulfonate, mono-, di- and tri-C₁-C₂₂-alkylbenzenesulfonates such as cumenesulfonate, nonylbenzenesulfonate, dodecylbenzenesulfonate and isotridecylbenzenesulfonate, or dodecyldiphenylether sulfonate;
c.4. sulfates and sulfonates of fatty acids having preferably 8 to 22 carbon atoms and of fatty acid esters, for example sulfates and sulfonates of mono-, di- and triglycerides and of C₁-C₈-alkyl C₈-C₂₂-alkanoates;
c.5. sulfates of ethoxylated C₈-C₂₂-alkanols, for example the sulfates of ethoxylated lauryl alcohol, of ethoxylated isotridecanol, of ethoxylated C₁₆-C₁₈-alkanol mixtures, of ethoxylated stearyl alcohol, etc.;
c.6. sulfates of ethoxylated hydroxyaromatics, in particular sulfates of ethoxylated phenols, for example sulfates of ethoxylated C₄-C₂₂₋alkylphenols, for example the sulfates of ethoxylated octylphenol, of ethoxylated nonylphenol, of ethoxylated dodecylphenol and of ethoxylated tridecylphenol, and also the sulfates of ethoxylated polyarylphenols, such as in particular sulfates of ethoxylated mono-, di- or tristyrylphenols;
c.7. phosphates of C₈-C₂₂-alkanols, of C₄-C₂₂-alkylphenols and of polyarylphenols, such as in particular of mono-, di- or tristyrylphenols;
c.8. phosphates of ethoxylated C₈-C₂₂-alkanols, of ethoxylated C₄-C₂₂-alkylphenols and of ethoxylated polyarylphenols, such as in particular of ethoxylated mono-, di- or tristyrylphenols;
c.9. mono- and di-C₄-C₂₂-alkyl esters of sulfosuccinic acid, such as dihexyl sulfosuccinate, dioctyl sulfosuccinate, and bis-2-ethylhexyl sulfosuccinate; and also
c.10. condensates of naphthalenesulfonic acid or phenolsulfonic acid with formaldehyde and, if appropriate, urea.

Preferred anionic surfactants for the liquid concentrate formulations according to the invention are those of groups c.3., c.6. and c.8. More preferably the anionic surfactants are selected from C₁-C₂₂₋alkylarylsulfonates, sulfates of ethoxylated C₄-C₂₂-alkylphenols, sulfates of ethoxylated polyarylphenols, phosphates of ethoxylated C₄-C₂₂-alkylphenols and phosphates of ethoxylated polyarylphenols, even more preferably from mono-, di- and tri-C₁-C₂₂-alkylbenzenesulfonates, sulfates of ethoxylated C₈-C₂₂-alkylphenols, phosphates of ethoxylated C₈-C₂₂-alkylphenols, sulfates of ethoxylated mono-, di- or tristyrylphenols and phosphates of ethoxylated mono-, di- or tristyrylphenols, and in particular from mono-C₈-C₂₂-alkylbenzenesulfonates, sulfates and phosphates of ethoxylated C₈-C₂₂-alkylphenols and sulfates of ethoxylated di- or tristyrylphenols. Specifically, the at least one anionic surfactant for the liquid concentrate formulations of the present invention is a mono-C₈-C₂₀-alkylbenzenesulfonate. An example of these preferred surfactants is dodecylbenzenesulfonate, which is available for example under the trade names Wettol® EM1 (from BASF), Witconate™ P-1220EH (from AkzoNobel), Ninate® 401-A (from Stepan), Nansa® EMV 62/H (from Huntsman), and Calsogen® EH (from Clariant).

The liquid concentrate formulations according to the invention comprise the at least one anionic surfactant typically in an amount of 0.1 to 30 wt%, preferably 0.5 to 20 wt%, in particular 1 to 10 wt%, and specifically 2 to 8 wt%, based on the total weight of the formulation.

Suitable non-ionic surfactants S for the liquid concentrate formulations of the invention are selected from the group consisting of C₂-C₃-polyalkoxylates of C₁₀-C₂₂-hydroxy fatty acid triglycerides and C₂-C₃-polyalkoxylates of C₁₀-C₂₂-fatty acid mono- or diglycerides, preferably from the group consisting of polyethoxylates of C₁₂-C₂₂-hydroxyfatty acid triglycerides and polyethoxylates of C₁₂-C₂₂-fatty acid mono- or diclycerides. In particular the at least one non-ionic surfactants S of the inventive formulations is selected from polyethoxylates of C₁₂-C₂₂-hydroxyfatty acid triglycerides, specifically from polyethoxylates of castor oil. Polyethoxylates of castor oils are available for example under the tradenames Emulpon™ CO-550 (from AkzoNobel), Wettol® EM31 (from BASF), Stepantex® CO-30 (from Stepan), Agnique® CSO-30 (from Cognis), Cirrasol™ G-1282 (from Croda) and Emulsogen® EL 360 (from Clariant).

The average degree of ethoxylation in the surfactant S is usually from 10 to 150, preferably from 15 to 100, in particular from 20 to 70 and specifically from 30 to 65.

The liquid concentrate formulations according to the invention comprise the at least one non-ionic surfactant S typically in an amount of 0.1 to 30 wt%. Generally, the amount of surfactant S comprised in the formulations of the invention depends in each individual case on the amounts of the pyripyropene derivative I, the aromatic hydrocarbon solvent, the anionic surfactant, the alkoxylate A and optional further ingredients, and also their properties. The weight ratio of surfactant S to the amount of the pyripyropene derivative I is usually in the range from 1 : 10 to 20 : 1, preferably from 1 : 5 to 10 : 1, in particular from 1 : 2 to 5 : 1, and specifically from 1 : 1.5 to 3 : 1. Based on the total weight of the formulations, the proportion of alkoxylate A is preferably from 1 to 10% by weight and in particular from 2 to 8% by weight.

The liquid concentrate formulations according to the invention may optionally further comprise a ketone having from 6 to 10 carbon atoms (C₆-C₁₀-ketone). In the context of the present invention such ketones include optionally alkoxylated aliphatic, cycloaliphatic and araliphatic ketones having 6 to 10 carbon atoms; for example, 2-hexanone, 3-hexanone, 2-heptanone, 3-heptanone, 4-heptanone, 2-octanone, 3-octanone, 4-octanone, 3-nonanone, 4-methyl-2-pentanone, 5-methyl-2-hexanone, cyclopentanone, cyclohexanone, cycloheptanone, cyclooctanone, cyclohexylcarbonylmethane, acetophenone and methoxyacetophenone.

According to a preferred embodiment the C₆-C₁₀-ketone, if present, is selected from acetophenone, cycloheptanone, cyclohexanone, 2-hexanone and 2-heptanone, and especially is 2-heptanone.

The inventive formulations generally comprise the C₆-C₁₀-ketone, if present, in an amount of 5 to 30 wt%, preferably 8 to 25 wt%, in particular 11 to 23 wt%, and specifically 14 to 21 wt%, based on the total weight of the formulation. Preferably the weight ratio of the C₆-C₁₀-ketone to the amount of the aromatic hydrocarbon solvent is at least 1 : 6, e.g. in the range from 1 : 6 to 2 : 1, preferably from 1 : 5 to 1 : 1, in particular from 1 : 4 to 1 : 1.5, and specifically from 1 : 3 to 1 : 2.

The liquid concentrate formulations according to the invention may optionally further comprise a at least one non-ionic block copolymer P comprising at least one polyethylene oxide moiety PEO and at least one polyether moiety PAO consisting of repeating units derived from C₃-C₆-alkylene oxides, in particular C₃-C₄-alkylene oxides, and/or styrene oxide, where the block copolymer P does not have alkyl or alkenyl groups with more than 6 carbon atoms.

The PAO moiety in the non-ionic block copolymer P usually comprises at least 3, preferably at least 5, in particular 10 to 100 repeating units (number average) which are derived from C₃-C₆ alkylene oxides, such as propylene oxide, 1,2-butylene oxide, cis- or trans-2,3-butylene oxide or isobutylene oxide, 1,2-pentene oxide, 1,2-hexene oxide or styrene oxide. Thus, the PAO moieties can be described by the general formula (-O-CHR^{x}-CHR^{y})_{q}, wherein q is the number of repeating units in the PAO moiety, R^{x} and R^{y} are independently selected from C₁-C₄ alkyl and hydrogen, provided that at least one of the radicals R^{x}, R^{y} is different from hydrogen and the total number of carbon atoms of R^{x} and R^{y} in one repeating unit is from 1 to 4. One of the radicals R^{x} or R^{y} may also be a phenyl radical while the other is hydrogen.

Preferably, the repeating units in the PAO moiety are derived from C₃-C₄-alkylene oxides, in particular from propylene oxide. Preferably, the PAO moieties comprise at least 50% by weight and more preferably at least 80% by weight of repeating units derived from propylene oxide. If the PAO moiety comprises different repeating units, these different repeating units may be arranged statistically or preferably blockwise.

According to a preferred embodiment of the invention the at least one polyether moiety PAO of the block copolymer P consists of repeating units derived from propylene oxide.

The PEO moieties of the non-ionic block copolymer P usually comprise at least 3, preferably at least 5, and more preferably at least 10 repeating units derived from ethylene oxide (number average). Thus, the PEO moiety can be described by the general formula (CH₂-CH₂-O)ₚ, wherein p is the number of repeating units within the PEO moiety.

The total number of ethylene oxide repeating units in the PEO moiety or moieties and repeating units in the PAO moiety will usually be in the range from 3 to 1,000, preferably 4 to 500 and in particular 5 to 150 (number average). Among the non-ionic block copolymers P those are preferred which have a number average molecular weight M_{N} ranging from 400 to 50,000 Dalton, preferably from 500 to 10,000 Dalton, more preferably from 750 to 6,000 Dalton and in particular from 1000 to 5,000 Dalton.

The weight ratio of PEO moieties to PAO moieties (PEO:PAO) in the non-ionic block copolymer P usually ranges from 1:10 to 10:1, preferably from 1:10 to 3:1, more preferably from 2:8 to 7:3 and in particular from 3:7 to 6:4.

In general, the PEO moieties and the PAO moieties the non-ionic block copolymer P make up at least 80% by weight and preferably at least 90% by weight, e.g. 90 to 99.5% by weight of the non-ionic block copolymer P.

Among the block copolymers P those are preferred which have a HLB-value ranging from 5 to 20 and in particular from 7 to 18. The HLB value (hydrophilic lipophilic balance) referred to herein is the HLB value according to Griffin (W.C. Griffin, J. Soc. Cosmet. Chem. 1,311 (1950); 5, 249 (1954) - see also P. Becher et al, Non-ionic surfactants, Physical Chemistry, Marcel Dekker, N.Y. (1987), pp. 439-456; H. Mollet et al. "Formulation Technology", 1st ed. Wiley-VCH Verlags GmbH, Weinheim 2001, pages 70-73 and references cited therein).

Preferred block copolymers for use in the formulations of the invention can be described by the following formulae P1 to P5:

| | |
|---|---|
| R¹-PEO-O-PAO-R² | P1 |
| R¹-PAO-O-PEO-H | P2 |
| R³-PEO-PAO-NR-PAO'-PEO'-R⁴ | P3 |
| R³-PEO-PAO-(O-A)ₙ-O-PAO'-PEO'-R⁴ | P4 |
| R³-PEO-PAO-NR^{a}-A'-NR^{b}-PAO'-PEO'-R⁴ | P5 |

wherein n is 0 or 1,
- A, A': are each a bivalent organic radical which has 2 to 20 carbon atoms and which may carry 1 or 2 hydroxy groups and/or 1, 2, 3 or 4 ether moieties and which may also carry 1 or 2 radicals of the formula R²-PEO-PAO-;
- PAO, PAO': are each, independently of one another, a PAO moiety as defined above, in particular a poly-C₃-C₄-alkylene oxide moiety;
- PEO, PEO': are polyethylene oxide moieties;
- R: is C₁-C₆-alkyl or a radical R²-PEO-PAO-;
- R¹: is C₁-C₆-alkyl or C₁-C₆-alkylphenyl;
- R², R³, R⁴: are each, independently of one another, hydrogen, C₁-C₆-alkyl, C₁-C₆-alkylcarbonyl, or benzyl; and
- R^{a}, R^{b}: are each, independently of one another, hydrogen, C₁-C₆-alkyl or a radical R²-PEO-PAO-.

A skilled person will readily understand that the radicals R¹, R², R³ and R⁴ in formulae P1 to P5 are linked to the PEO or PAO moiety via an oxygen atom.

R¹ and R² in formulae P1 and P2 are preferably C₁-C₆-alkyl, such as methyl, ethyl, n-propyl, isopropyl, n-butyl, 2-butyl, n-pentyl, n-hexyl and the like. R² in formula P1 is preferably hydrogen. R³ and R⁴ in formulae P3, P4 and P5 are preferably hydrogen. R in formula P3 is preferably C₁-C₆-alkyl, in particular C₂-C₆-alkyl.

Suitable radicals A and A' in formulae P4 and P5 may be aliphatic or cycloaliphatic radicals or aromatic radicals or mixed aromatic/aliphatic or mixed aliphatic/cycloaliphatic radicals. Examples for aliphatic radicals A and A' are C₂-C₆-alkandiyl and C₂-C₂₀-alkandiyl with 1, 2, 3 or 4 CH₂-moieties being replaced by oxygen or sulfur, e.g. ethane-1,2-diyl, propane-1,3-diyl, butane-1,4-diyl, hexane-1,4-diyl, 3-oxapentane-1,5-diyl, 3-oxahexane-1,6-diyl, 4-oxaheptane-1,7-diyl, 3,6-dioxaoctane-1,8-diyl, 3,7-dioxanonane-1,9-diyl and 3,6,9-trioxaundecan-1,11-diyl. Examples of cycloaliphatic radicals A, A' comprise C₅-C₆-cycloalkane-diyl, which may carry 1, 2, 3 or 4 C₁-C₄-alkyl groups, e.g. methyl groups, such as cyclohexane-1,2-, - 1,3-, and -1,4-diyl. Aromatic radicals A, A' are for example 1,2-phenylene, 1,3-phenylene, 1,4-phenylene. Mixed aliphatic/aromatic radicals A, A' are those which comprise one or more alkanediyl units and at least one aromatic unit such as a phenyl ring. Examples for mixed aliphatic/aromatic radicals A, A' comprise diphenylmethane-4,4'-diyl, 4,4'-[2,2-bis(phenyl)propane]diyl and the like. Preferred radicals A, A' are selected from C₂-C₆-alkandiyl and C₂-C₂₀-alkandiyl with 1, 2, 3 or 4 CH₂-moieties being replaced by oxygen.

Amongst the non-ionic block copolymers P of formulae P1 to P5 those of formulae P2 and P4 are especially preferred. Particularly preferred are block copolymers P of formulae P2 and P4 wherein the PAO moieties are derived from propylene oxide.

In one embodiment of the invention the non-ionic block copolymer P comprises a terminal C₁-C₆-alkyl group, such as methyl, ethyl, n-propyl, isopropyl, n-butyl, isobutyl, sec-butyl, n-heptyl or n-hexyl, and in particular n-butyl. According to this embodiment preferred non-ionic block copolymers P are those of formula P1 with at least one of R³ and R⁴ being a C₁-C₆-alkyl group, those of formula P2 with R¹ being a C₁-C₆-alkyl group and those of formulae P3, P4 and P5, respectively, with at least one of R³ and R⁴ being a C₁-C₆-alkyl group. Particularly preferred non-ionic block copolymers P according to this embodiment are those of formula P2 with R¹ being a C₁-C₆-alkyl group, in particular butyl, and also those of formula P4 with at least one of R³ and R⁴ being a C₁-C₆-alkyl group, in particular butyl, and preferably n being 0.

According to the invention, a single type of non-ionic block copolymer P or different types of block copolymers P may be used. In a preferred embodiment of the invention the liquid pesticide formulation comprises a single type of non-ionic block copolymer P. In another preferred embodiment the liquid pesticide formulation comprises 2 different types of non-ionic block copolymers P. Different types means that the block copolymers are distinct with regard to at least one of the following features: molecular weight, weight ratio of PEO to PAO, the HLB-value or the molecular architecture. In case 2 different non-ionic block copolymers P are used, preferably one and more preferably both of the block copolymers combine at least two or all of the preferred features. In such mixtures the block copolymer P that combines at least two or all of the preferred features makes up at least 20% by weight, preferably at least 30% by weight, e.g. 20 to 90% by weight, in particular 30 to 80% by weight of the total amount of block copolymer P in the formulation.

Non-ionic block copolymers P are known in the art and commercially available under the trade names Pluronic®, such as Pluronic® P 65, P84, P 103, P 105, P 123 and Pluronic® L 31, L 43, L 62, L 62 LF, L 64, L 81, L 92 and L 121, Pluraflo® such as Pluraflo® L 860, L1030 and L 1060; Pluriol® such as Pluriol® WSB-125, Tetronic®, such as Tetronic® 704, 709, 1104, 1304, 702, 1102, 1302, 701, 901, 1101, 1301 (BASF SE), Agrilan® AEC 167 and Agrilan® AEC 178 (Akcros Chemicals), Antarox® B/848 (Rhodia), Berol® 370 and Berol® 374 (Akzo Nobel Surface Chemistry), Dowfax® 50 C15, 63 N10, 63 N30, 64 N40 and 81 N10 (Dow Europe), Genapol® PF (Clariant), Monolan®, such as Monolan® PB, Monolan® PC, Monolan® PK (Akcros Chemicals), Panox® PE (Pan Asian Chemical Corporation), Symperonic®, such as Symperonic® PE/L, Symperonic® PE/F, Symperonic® PE/P, Symperonic® PE/T (ICI Surfactants), Tergitol® XD, Tergitol® XH and Tergitol® XJ (Union Carbide), Triton® CF-32 (Union Carbide), Teric PE Series (Huntsman) and Witconol®, such as Witconol® APEB, Witconol® NS 500 K and the like. Likewise particular preference is given to poly(ethoxylate-co-propoxylates) of C₁-C₆ alkanols, having a number average molecular weight M_{N} of from 1000 to 5000 Dalton Particularly preferred examples include Atlas® G 5000 (Croda), Tergitol®XD, Pluronic® P105 and Pluriol® WSB-125 and the like.

The inventive formulations generally comprise the non-ionic block copolymer P, if present, in an amount of 0.1 to 20 wt%, preferably 0.2 to 15 wt%, in particular 0.5 to 10 wt%, and specifically 1 to 8 wt%, based on the total weight of the formulation.

The liquid concentrate formulations according to the invention optionally further comprise at least one pH adjuster which is a base preferably selected from organic amines comprising at least one primary, secondary, and/or tertiary amino group. Preferred amines comprise at least one secondary and/or tertiary amino group, and in particular comprise at least one tertiary amino group.

The organic amines have typically a pH value of at least 7.0 (preferably at least 7.5, in particular at least 8.0) in water at 20 °C at a concentration of 0.1 mol/l. In other words, pH adjusters are preferably selected from those amines which form aqueous solutions having pH values of at least 7.0, preferably at least 7.5, in particular at least 8.0 at 20 °C at a concentration of 0.1 mol/I in water. Often, said pH value is in a range from 7.0 to 14.0, preferably from 7.5 to 12.0, and in particular from 8.0 to 10.0. Preferred amines are those, where the acidity constant pKₐ of the conjugate ammonium ion at 20°C in water is generally at least 7.0, preferably at least 8.0 in particular at least 8.5, e.g. from 7.0 to 14, in particular from 8.0 to 13.0 and especially from 8.5 to 12.0.

Usually, the boiling point at 1013 mbar of the amine is at least 40 °C, preferably at least 80 °C, and in particular at least 150 °C. Preferably, the amine is free of an aromatic group.

The amine has usually a solubility in water of at least 0.1 g/l at 20 °C, preferably at least 1.0 g/l and in particular at least 10 g/l.

Examples of amines are ammonia (NH₃), 2-(2-aminoethoxy)ethanol (DGA), dimethylamine (DMA), N-aminopropylmorpholine (APM), tetraethylenepentamine (TEPA), dipropylene triamine, diethylenetriamine (DETA), tetra(2-hydroxypropyl)ethylenediamine (Quadrol®), triethanolamine (TEA), hexamethylenediamine, Jeffamine D-230, triisopropanolamine (TIPA), hexamethylenetetramine, diethylethanolamine (DEEA), DMF-DMA, 2-(diethylamino)ethylamine, 2-phenylethylamine, 3-(2-ethylhexoxy)propylamine, 3-ethoxypropylamine, 3-meth-oxypropylamine, butylamine, cyclohexylamine, di-2-ethylhexylamine (DEHA), dibutylamine, diethylamine (DEA), diethylamine (DEA), dipropylamine, dipropylene triamine, ditridecylamine (DTD amine), hexylamine, isopropylamine, pentamethyldiethylenetriamine (PM-DETA), methoxyisopropylamine, N,N-bis-3-aminopropylmethylamine (BAPMA), N,N-dimethylisopropylamine, N-ethyldiisopropylamine, N-octylamine, 3-(2-aminoethylamino)propylamine (N3-amine), propylamine, tributylamine, tridecylamine, tripropylamine, tris-(2-ethylhexyl)amine (TEHA), tert-butylamine (t-BA), diisopropanolamine (DIPA), N,N-dimethylethanolamine, N,N-dimethylisopropanolamine, N-methylethanolamine (NMEA), N-methyldiethanolamine (MDEA), 2,6-xylidine, dicykan, benzylamine, dimethylcyclohexylamine (DMCHA), N,N-dimethylbenzylamine (DMBA), N-(2-hydroxyethyl)aniline, o-toluidine, ethyl-(2-hydroxyethyl)aniline, 1,2-propylene-diamine (1.2-PDA), 1,3-diaminopropane (DAP), dimethyldicykan (DMDC), 3-amino-propyldiethyleneglycol (mono-TTD), 4,7,10-trioxatridecane-1,13-diame (TTD), 4,9-dioxadodecane,1,12-diamine (DODA), dimethylaminopropylamine (DMAPA), ethylenediamine (EDA), isophoronediamine, triethylenediame (TEDA), bis(2-dimethylaminoethyl)ether (BDMAEE), N-(2-aminoethyl)ethanolamine (AEE), N-ethylpiperazine, 2,2-dimethyl-propane-1,3-diamine, piperazine, diethanolamine (DEA), N-ethylethanolamine (EEA), monoethanolamine (MEOA), N-(2-aminoethyl)ethanolamine, polyetheramine D 2000 (PEA D 2000), polyetheramine D 400 (PEA D 2000), polyetheramine T403, 1-methyl imidazole, 1-vinylimidazole, 2-ethyl imidazole, 2-methyl imidazole, imidazole, 1,2-dimethyl imidazole, morpholine, pyrrolidine, diisopropanol-p-toluidine (PIIPT), isopropanolamine, 2,2'-dimorpholinyldiethylether (DMDEE), N-ethylmorpholine (NEM), N-methylmorpholine, dimethylaminoethoxyethanol (DMEE), N,N'-dimethylpiperazine, trimethylaminoethylethanolamine (TMAEEA), S-triazine, 1,8-diazabicyclo-5,4,0-undecene-7, N-(3-aminopropyl)imidazole, N-butylethanolamine (BEA), 3-((2-hdroxyethyl)amino)propanol, 3-amino-1-propanol, 3-dimethyl-aminopropane-1-ol, aminoethylethanolamine (AEEA), N-methylmorpholine oxide (NMMO), N-aminoethylpiperazine (AEP), dimethylpiperazine (DMP), methoxypropylamine (MOPA), tetramethylbis(aminoethyl)ether(ZF-20), N,N-dimethyl-2(2-aminoethoxy)ethanol (ZR-70), pentamethyldipropylenetriamine (ZR-40), tetramethyldipropylenetriamine (Z-130), benzyldimethylamine (BDMA), triethylenetetramine (TETA), Jeffamine® D-400, monoisopropanolamine (MIPA).

Further suitable amines are amines which comprise an alkoxylated amino group. Preferred are alkoxylated C₈-₂₄ fatty amines, especially ethoxylated C₁₂₋₂₀ fatty amines. Examples are ethoxylated coco amine, POE 2 (Agnique® CAM-2), ethoxylated coco amine, POE 10 (Agnique® CAM-10), ethoxylated coco amine, POE 15 (Agnique® CAM-15), ethoxylated coco amine, POE 20 (Agnique® CAM-20), ethoxylated oleyl amine, POE 30 (Agnique® OAM-30), ethoxylated tallow amine, POE 5 (Agnique® TAM-5), ethoxylated tallow amine, POE 10 (Agnique® TAM-10), ethoxylated tallow amine, POE 15 (Agniqu® TAM-15), ethoxylated tallow amine, POE 20 (Agnique® TAM-20), ethoxylated tallow amine, POE 50 (Agnique® TAM-50), ethoxylated stearyl amine, POE 50 (Agnique® SAM-50). The Agnique product series is available from Cognis.

Suitable organic amines are in particular those of the formula III 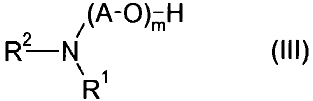 where:
- R¹: is H, C₁-C₄-alkyl, or a radical (A-O)ₙH, in particular a radical of the formula (A-O)ₙH,
- A: is C₂-C₄-alkandiyl, in particular 1,2-ethandiyl or 1,2-propandiyl,
- m: is an integer from 1 to 100, in particular 1 to 50, m may also be 0, if at least one of R¹, R² and in particular both R¹ and R² is/are different from H;
- n: is an integer from 1 to 100, in particular from 1 to 50,
- R²: is H, C₁-C₃₀ alkyl, C₂-C₃₀ alkenyl or a radical of formula -[A'-N(R³)]ₖ-A'-NR⁴R⁵, where
- A': is C₂-C₄-alkandiyl, in particular 1,2-ethandiyl, 1,2-propandiyl, 1,3-propandiyl or 1,4-butandiyl,
- k: is an integer from 0 to 10, in particular 0, 1 or 2,
- R³: is H, C₁-C₄-alkyl, or a radical (A-O)ₙH, in particular a radical (A-O)ₙH,
- R⁴: is H, C₁-C₄-alkyl, or a radical (A-O)ₙH, in particular a radical (A-O)ₙH, and
- R⁵: is H, C₁-C₄-alkyl, or a radical (A-O)ₙH, in particular a radical (A-O)ₙH, or
- NR⁴R⁵: represent an N-bound pyrrolidinyl, piperidinyl, piperazinyl or morpholinyl radical.

Here and in the following, the suffix Cₙ-Cₘ indicates the number range for the number of possible carbon atoms of the respective radical. Hence, C₁-C₃₀ alkyl is a linear or branched alkyl radical having from 1 to 30 carbon atoms. Likewise, C₂-C₃₀ alkenyl is a linear or branched aliphatic radical having from 1 to 30 carbon atoms, which has at least 1, e.g. 1, 2 or 3 C=C-double bonds. C₁-C₄ Alkyl is a linear or branched alkyl radical having from 1 to 4 carbon atoms, examples including methyl, ethyl, n-propyl, isopropyl, n-butyl, 2-butyl, isobutyl (= 2-methylpropan-1-yl) or tert.-butyl (= 2-methylpropan-2-yl). C₂-C₄ Alkandiyl is a linear or branched divalent alkyl radical having from 2 to 4 carbon atoms, examples including 1,2-ethandiyl, 1,2-propandiyl, 1,3-propandiyl, 1,2-butandiyl, 1,3-butandiyl, 1,1-dimethylethan-1,2-diyl 1,2-dimethylethan-1,2-diyl or 1,4-butandiyl.

Amongst the amines of formula III those are preferred, where m is from 1 to 100, in particular from 1 to 50 and R¹ is a radical of the formula (A-O)ₙH, where n is from 1 to 50 in particular from 1 to 50.

Amongst the amines of formula III those are preferred, where R² is C₅-C₃₀ alkyl, C₅-C₃₀ alkenyl or a radical of formula -[A'-N(R³)]ₖ-A'-NR⁴R⁵, where A' is C₂-C₄-alkandiyl, in particular 1,2-ethandiyl, 1,2-propandiyl, 1,3-propandiyl or 1,4-butandiyl, k is an integer from 0 to 10, in particular 0, 1 or 2, R³ , R⁴ and R⁵, independently from each other are selected from the group consisting of is H, C₁-C₄-alkyl and a radical (A-O)ₙH, in particular a radical (A-O)ₙH, where A and n are as defined above and were n is in particular from 1 to 50 and where A is in particular 1,2-ethandiyl or 1,2-propandiyl.

Amongst the amines of formula III those are particularly preferred, where R² is C₅-C₃₀ alkyl or C₅-C₃₀ alkenyl, especially C₈-C₂₄ alkyl or C₈-C₂₄ alkenyl, m is from 1 to 50, in particular from 2 to 50 and R² is a radical of the formula (A-O)ₙH, where A and n are as defined above and were n is in particular from 1 to 50, especially from 2 to 50 and where A is in particular 1,2-ethandiyl or 1,2-propandiyl.

Amongst the amines of formula III those are likewise preferred, where R² is radical of formula -[A'-N(R³)]ₖ-A'-NR⁴R⁵, where A' is C₂-C₄-alkandiyl, in particular 1,2-ethandiyl, 1,2-propandiyl, 1,3-propandiyl or 1,4-butandiyl, k is as defined above, in particular 0, 1 or 2, R³ , R⁴ and R⁵, independently from each other are selected from the group consisting of is H, C₁-C₄-alkyl and a radical (A-O)ₙH, in particular a radical (A-O)ₙH, where A and n are as defined above and were n is in particular from 1 to 10 and where A is in particular 1,2-ethandiyl or 1,2-propandiyl, m is from 1 to 50, in particular from 1 to 10 and R² is a radical of the formula (A-O)ₙH, where A and n are as defined above and were n is in particular from 1 to 10 and where A is in particular 1,2-ethandiyl or 1,2-propandiyl.

Particularly preferred pH adjusters are amines which contain at least one secondary and/or tertiary amino group, especially those amines which contain at least one tertiary amino group, and amines which comprise an alkoxylated amino group, in particular those of the formula III, preferably alkoxylated C₈₋₂₄ fatty amines, in particular those of the formula III, where R² is C₈-C₂₄ alkyl or C₈-C₂₄ alkenyl, in particular C₁₀-C₂₂ alkyl or C₁₀-C₂₂ alkenyl, m is from 1 to 50, in particular from 2 to 50 and R² is a radical of the formula (A-O)ₙH, where A and n are as defined above and were n is in particular from 1 to 50, especially from 2 to 50 and where A is in particular 1,2-ethandiyl or 1,2-propandiyl. Examples such fatty amines include ethoxylated coco amine, POE 2 (Agnique® CAM-2), ethoxylated coco amine, POE 10 (Agnique® CAM-10), ethoxylated coco amine, POE 15 (Agnique® CAM-15), ethoxylated coco amine, POE 20 (Agnique® CAM-20), ethoxylated oleyl amine, POE 30 (Agnique® OAM-30), ethoxylated tallow amine, POE 5 (Agnique® TAM-5), ethoxylated tallow amine, POE 10 (Agnique® TAM-10), ethoxylated tallow amine, POE 15 (Agniqu® TAM-15), ethoxylated tallow amine, POE 20 (Agnique® TAM-20), ethoxylated tallow amine, POE 50 (Agnique® TAM-50), ethoxylated stearyl amine, POE 50 (Agnique® SAM-50).

The inventive formulations generally comprise the pH adjuster, if present, in an amount of 0.001 to 10 wt%, preferably 0.01 to 7 wt%, in particular 0.03 to 4 wt%, and specifically 0.05 to 2 wt%, based on the total weight of the formulation.

The liquid concentrate formulations according to the invention generally comprise the pyripyropene derivative of formula I in a concentration of from 0.5 to 30 wt%, frequently from 1 to 20 wt%, in particular from 1 to 10 wt%, specifically from 2 to 10 wt% or from 3 to 7 wt%, based on the total weight of the formulation. In the case of one or more further active compounds, such as for crop protection, in addition to the pyripyropene derivative I, the total concentration of active compounds is generally in the range from 1 to 40 wt%, frequently in the range from 1 to 30 wt% and in particular in the range from 2 to 25 wt% or in the range from 2.5 to 15 wt%, based on the total weight of the formulation.

The liquid concentrate formulations according to the invention may also comprise water. As regards the total weight of the undiluted formulation, the amount of water is, as a rule, in the range of up to 10 wt%, preferably up to 7 wt% and in particular up to 5 wt%. It is obvious that the amount of water and the amounts of the remaining constituents total 100% by weight.

According to a preferred embodiment the liquid concentrate formulations of the invention do not comprise water or virtually do not comprise water, i.e. less than 2 wt%, preferably less than 1 wt% and in particular less than 0.5 wt% of water.

In a preferred embodiment of the invention, the formulations according to the invention comprise:
a) from 1 to 10 wt%, in particular from 2 to 10 wt% or 3 to 7 wt%, based on the total weight of the formulation, of pyripyropene derivative of the formula I;
b) 30 to 70 wt%, in particular from 40 to 70 wt%" based on the total weight of the formulation, of an aromatic hydrocarbon solvent or aromatic hydrocarbon solvent mixture,
c) from 10 to 40 wt%, in particular from 15 to 30 wt%, based on the total weight of the formulation, of at least one alkoxylated aliphatic alcohol of the formula (A);
d) from 1 to 10 wt%, in particular from 2 to 8 wt%, based on the total weight of the formulation, of the at least one anionic surfactant;
e) 1 to 10 wt%, in particular from 2 to 8 wt%, based on the total weight of the formulation, of the at least one non-ionic surfactant S;
f) optionally 5 to 30 wt%, in particular from 8 to 25 wt%, based on the total weight of the formulation, of the at least one a ketone having from 6 to 10 carbon atoms; and
g) optionally 0.5 to 10 wt%, in particular from 1 to 8 wt%, based on the total weight of the formulation, at least one non-ionic block copolymer P comprising at least one polyethylene oxide moiety PEO and at least one polyether moiety PAO consisting of repeating units derived from C₃-C₄-alkylene oxides and/or styrene oxide, where the block copolymer P does not have alkyl or alkenyl groups with more than 6 carbon atoms;
where the total amount of components a), b), c), d), e) and, if present, components f) and g) add up to at least 90 wt%, in particular to at least 95 wt%, of the total amount of the formulation.

In preferred formulation according to the invention the at least one alkoxylate A is the sole adjuvant used for enhancing the insecticidal activity of pyripyropene derivative I. However, the alkoxylate A may also be combined with an additional different adjuvant. In the latter case, the inventive formulations comprise at least one alkoxylate A and at least one adjuvant different therefrom, the total amount of adjuvant is generally at least 20 wt%, e.g. form 20 to 90 wt%, preferably at least 35 wt%, and in particular from 35 to 80 wt%, based on the total weight of the formulation.

In addition to the pyripyropene derivative of the formula I the formulations according to the invention may comprise further active compounds for crop protection for increasing the activity and/or for broadening the application spectrum, such as additional insecticides, e.g. insecticidal compounds having similar or complementary activity in respect of pyripyropene derivative I, or compounds with completely different biological activity, such as herbicides, fungicides and plant growth regulators. However, in general pyripyropene derivative of formula I is the only active compound or constitutes at least 80 wt%, preferably at least 90 wt%, of the active compounds comprised in the formulation.

The inventive composition may also comprise auxiliaries which are customary in agrochemical compositions. The auxiliaries used depend on the particular application form and active substance, respectively. Examples for suitable auxiliaries are organic and inorganic thickeners, bactericides, anti-freezing agents, anti-foaming agents, and, if appropriate, colorants and tackifiers or binders (e. g. for seed treatment formulations).

Examples for thickeners (i. e. compounds that impart a modified flowability to formulations, i. e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA). Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie). Examples for suitable anti-freezing agents are ethylene glycol, propylene glycol, urea and glycerin. Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof. Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. Examples for tackifiers or binders are polyvinylpyrrolidons, polyvinylacetates, polyvinyl alcohols and cellulose ethers (Tylose®, Shin-Etsu, Japan).

The customary auxiliaries mentioned above can be added during the preparation of the formulations according to the invention and thus may optionally be contained within the inventive formulations. Alternatively, it is also possible to add these auxiliaries during or after dilution with water to the ready-to-use aqueous formulation, which are described with more detail below.

In general, the liquid concentrate formulation of the invention can be prepared by simply mixing the constituents until an apparently homogeneous liquid has formed. The order in which the constituents are added is usually of minor importance. For example, the constituents may be put into a container and the mixture thus obtained is homogenized, for example by stirring, until a homogeneous liquid has formed. However, it is often advantageous to initially mix together the propylene glycol, the alkoxylate A, the C₂-C₄-alkylene carbonate, the surfactant S and water, if applicable, and agitate until apparent homogeneity is reached, then to add the pyripyropene derivative I and possibly further active compounds and agitate until all active compounds are apparently completely dissolved. Optional further constituents, such as auxiliaries, can either be intermixed with the thus obtained formulation or added at an earlier stage of the preparation process. The temperature during mixing and the further mixing conditions are of minor importance. Usually, mixing of the constituents is carried out at ambient temperature.

The invention also relates to aqueous ready-to-use preparations obtained by diluting the formulation of the invention with at least 5 parts of water, preferably at least 10 parts of water, in particular at least 20 parts of water and more preferably at least 50 parts of water, e.g. from 10 to 10,000, in particular from 20 to 1,000 and more preferably from 50 to 250 parts of water per one part of the liquid formulation (all parts are given in parts by weight).

Dilution will be usually achieved by pouring the liquid concentrate formulation of the invention into water. Usually, dilution is achieved with agitation, e.g. with stirring, to ensure a rapid mixing of the concentrate in water. However, agitation is generally not necessary. Though the temperature of mixing is not critical, mixing is usually performed at temperatures ranging from 0 to 50°C, in particular from 10 to 30°C or at ambient temperature.

The water used for mixing is usually tap water. However the water may already contain water soluble compounds which are used in plant protection, e.g. nutrificants, fertilizers or water soluble pesticides.

The formulations of the invention can be applied in a conventional manner, e.g. in diluted form as an aqueous ready-to-use preparation described above. The inventive aqueous ready-to-use preparations can be applied by spraying, in particular spraying of the leaves. Application can be carried out using spraying techniques known to the person skilled in the art, for example using water as carrier and amounts of spray liquor of about 100 to 1000 liters per hectare, for example from 300 to 400 liters per hectare.

The present invention further relates to a method for controlling insects, arachnids or nematodes comprising contacting an insect, acarid or nematode or their food supply, habitat, breeding grounds or their locus with an inventive formulation or preparation in pesticidally effective amounts.

The inventive composition exhibits outstanding action against animal pests (e.g. insects, acarids or nematodes) from the following orders:
Insects from the order of the lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Pieris rapae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis;
beetles (Coleoptera), for example Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus and Sitophilus granaria;
flies, mosquitoes (Diptera), e.g. Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca autumnalis, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga spp., Simulium vittatum, Stomoxys calcitrans, Tabanus bovinus, Tabanus atratus, Tabanus lineola, and Tabanus similis, Tipula oleracea, and Tipula paludosa; thrips (Thysanoptera), e.g. Dichromothrips corbetti, Dichromothrips ssp., Frankliniella fusca, Frankliniella occidentalis, Frankliniella tritici, Scirtothrips citri, Thrips oryzae, Thrips palmi and Thrips tabaci,
termites (Isoptera), e.g. Calotermes flavicollis, Leucotermes flavipes, Heterotermes aureus, Reticulitermes flavipes, Reticulitermes virginicus, Reticulitermes lucifugus, Reticulitermes santonensis, Reticulitermes grassei, Termes natalensis, and Coptotermes formosanus;
cockroaches (Blattaria - Blattodea), e.g. Blattella germanica, Blattella asahinae, Periplaneta americana, Periplaneta japonica, Periplaneta brunnea, Periplaneta fuligginosa, Periplaneta australasiae, and Blatta orientalis;
bugs, aphids, leafhoppers, whiteflies, scale insects, cicadas (Hemiptera), e.g. Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis, Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Bemisia argentifolii, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzus persicae, Myzus ascalonicus, Myzus cerasi, Myzus varians, Nasonovia ribisnigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp., and Arilus critatus;
ants, bees, wasps, sawflies (Hymenoptera), e.g. Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Lasius niger, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus spp., Vespula squamosa, Paravespula vulgaris, Paravespula pennsylvanica, Paravespula germanica, Dolichovespula maculata, Vespa crabro, Polistes rubiginosa, Camponotus floridanus, and Linepithema humile;
crickets, grasshoppers, locusts (Orthoptera), e.g. Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera, and Locustana pardalina;
arachnoidea, such as arachnids (Acarina), e.g. of the families Argasidae, Ixodidae and Sarcoptidae, such as Amblyomma americanum, Amblyomma variegatum, Ambryomma maculatum, Argas persicus, Boophilus annulatus, Boophilus decoloratus, Boophilus microplus, Dermacentor silvarum, Dermacentor andersoni, Dermacentor variabilis, Hyalomma truncatum, Ixodes ricinus, Ixodes rubicundus, Ixodes scapularis, Ixodes holocyclus, Ixodes pacificus, Ornithodorus moubata, Ornithodorus hermsi, Ornithodorus turicata, Ornithonyssus bacoti, Otobius megnini, Dermanyssus gallinae, Psoroptes ovis, Rhipicephalus sanguineus, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and Oligonychus pratensis; Araneida, e.g. Latrodectus mactans, and Loxosceles reclusa;
fleas (Siphonaptera), e.g. Ctenocephalides felis, Ctenocephalides canis, Xenopsylla cheopis, Pulex irritans, Tunga penetrans, and Nosopsyllus fasciatus,
silverfish, firebrat (Thysanura), e.g. Lepisma saccharina and Thermobia domestica, centipedes (Chilopoda), e.g. Scutigera coleoptrata,
millipedes (Diplopoda), e.g. Narceus spp.,
earwigs (Dermaptera), e.g. forficula auricularia,
lice (Phthiraptera), e.g. Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus and Solenopotes capillatus.
Collembola (springtails), e.g. Onychiurus ssp..

The formulations and preparations of the present invention are also suitable for controlling nematodes : plant parasitic nematodes such as root knot nematodes, Meloidogyne hapla, Meloidogyne incognita, Meloidogyne javanica, and other Meloidogyne species; cyst-forming nematodes, Globodera rostochiensis and other Globodera species; Heterodera avenae, Heterodera glycines, Heterodera schachtii, Heterodera trifolii, and other Heterodera species; Seed gall nematodes, Anguina species; Stem and foliar nematodes, Aphelenchoides species; Sting nematodes, Belonolaimus longicaudatus and other Belonolaimus species; Pine nematodes, Bursaphelenchus xylophilus and other Bursaphelenchus species; Ring nematodes, Criconema species, Criconemella species, Criconemoides species, Mesocriconema species; Stem and bulb nematodes, Ditylenchus destructor, Ditylenchus dipsaci and other Ditylenchus species; Awl nematodes, Dolichodorus species; Spiral nematodes, Heliocotylenchus multicinctus and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, Longidorus elongatus and other Longidorus species; Lesion nematodes, Pratylenchus neglectus, Pratylenchus penetrans, Pratylenchus curvitatus, Pratylenchus goodeyi and other Pratylenchus species; Burrowing nematodes, Radopholus similis and other Radopholus species; Reniform nematodes, Rotylenchus robustus and other Rotylenchus species; Scutellonema species; Stubby root nematodes, Trichodorus primitivus and other Trichodorus species, Paratrichodorus species; Stunt nematodes, Tylenchorhynchus claytoni, Tylenchorhynchus dubius and other Tylenchorhynchus species; Citrus nematodes, Tylenchulus species; Dagger nematodes, Xiphinema species; and other plant parasitic nematode species.

The formulations and preparations according to the invention can be applied to any and all developmental stages of pests, such as egg, larva, pupa, and adult. The pests may be controlled by contacting the target pest, its food supply, habitat, breeding ground or its locus with a pesticidally effective amount of the inventive formulations and preparations. "Locus" means a plant, plant propagation material (preferably seed), soil, area, material or environment in which a pest is growing or may grow.

In general, "pesticidally effective amount" means the amount of the inventive formulations and preparations needed to achieve an observable effect on growth, including the effects of necrosis, death, retardation, prevention, and removal, destruction, or otherwise diminishing the occurrence and activity of the animal pest. The pesticidally effective amount can vary for the various formulations and preparations used in the invention. A pesticidally effective amount of the formulations and preparations will also vary according to the prevailing conditions such as desired pesticidal effect and duration, weather, target species, locus, mode of application, and the like.

The inventive formulations and preparations are employed by treating the animal pest or the plants, plant propagation materials (preferably seeds), materials or soil to be protected from pesticidal attack with a pesticidally effective amount of the active compounds. The application can be carried out both before and after the infection of the materials, plants or plant propagation materials (preferably seeds) by the pests.

Preferably, the inventive formulations and preparations are employed by treating the animal pests or the plants or soil to be protected from pesticidal attack via foliar application with a pesticidally effective amount of the active compounds. In addition, the application can be carried out both before and after the infection of the plants by the pests.

In the method of combating animal pests (insects, acarids or nematodes) the application rates of the formulations and preparations according to the invention depend on the intensity of the infestation by pests, on the development phase of the plants, on the climatic conditions at the application site, on the application method, on whether pyripyropene derivative I is used solely or in combination with further active compounds and on the desired effect. In general, the application rate is in the range of from 0.1 g/ha to 10000 g/ha, preferably 1 g/ha to 5000 g/ha, more preferably from 20 to 1000 g/ha, most preferably from 10 to 750 g/ha, in particular from 20 to 500 g/ha of total active compound.

In the context of the present invention, the term plant refers to an entire plant, a part of the plant or the propagation material of the plant.

Plants and as well as the propagation material of said plants, which can be treated with the inventive formulations and preparations include all genetically modified plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

For example, formulations and preparations according to the present invention can be applied (as seed treatment, spray treatment, in furrow or by any other means) also to plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transitional modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus Bacillus, particularly from Bacillus thuringiensis, such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme phosphinothricin-N-acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against Phytophthora infestans derived from the mexican wild potato Solanum bulbocastanum) or T4-lysozym (e. g. potato cultivars capable of synthesizing these proteins with increased resistance against bacteria such as Erwinia amylvora). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The inventive formulations and preparations are effective through both contact (via soil, glass, wall, bed net, carpet, plant parts or animal parts), and ingestion (bait, or plant part) and through trophallaxis and transfer.

Preferred application methods are into water bodies, via soil, cracks and crevices, pastures, manure piles, sewers, into water, on floor, wall, or by perimeter spray application and bait.

Methods to control infectious diseases transmitted by non-phytopathogenic insects (e.g. malaria, dengue and yellow fever, lymphatic filariasis, and leishmaniasis) with the inventive formulations and their respective preparations or compositions also comprise treating surfaces of huts and houses, air spraying and impregnation of curtains, tents, clothing items, bed nets, tsetse-fly trap or the like. Insecticidal compositions for application to fibers, fabric, knitgoods, non-wovens, netting material or foils and tarpaulins preferably comprise a composition including an inventive formulation, optionally a repellent and at least one binder.

The inventive formulations and preparations can be used for protecting wooden materials such as trees, board fences, sleepers, etc. and buildings such as houses, outhouses, factories, but also construction materials, furniture, leathers, fibers, vinyl articles, electric wires and cables etc. from ants and/or termites, and for controlling ants and termites from doing harm to crops or human being (e.g. when the pests invade into houses and public facilities).

In the case of soil treatment or of application to the pests dwelling place or nest, the quantity of active compound ranges from 0.0001 to 500 g per 100 m², preferably from 0.001 to 20 g per 100 m².

Customary application rates in the protection of materials are, for example, from 0.01 g to 1000 g of active compound per m² treated material, desirably from 0.1 g to 50 g per m².

The invention further relates to methods for protection of plant propagation material, termed herein also methods for seed treatment, which methods comprise contacting the plant propagation material with a formulation or preparation of the invention or a composition derived therefrom in pesticidally effective amounts. The methods for seed treatment comprise all suitable methods known to the person skilled in the art for treating seed, such as, for example, seed dressing, seed coating, seed soaking, seed film coating, seed multilayer coating, seed encrusting, seed dripping, seed dusting and seed pelleting.

The formulations and preparations of the invention can be used as is for seed treatment. Alternatively, the inventive formulations and preparations can be converted into compositions for seed treatment using methods known to skilled person, e.g. by adding auxiliaries such as colorants, tackifiers or binders.

In a first embodiment of seed treatment according to the invention, the seed, i.e. the plant product capable of propagation, intended for sowing, is treated with an inventive formulation or preparation, or a composition derived therefrom. Here, the term seed comprises seeds and plant parts capable of propagation of any type, including seeds, seed grains, parts of seeds, seedlings, seedlings' roots, saplings, shoots, fruits, tubers, cereal grains, cuttings and the like, in particular grains and seeds.

Alternatively, the seed may also be treated with the inventive formulation or preparation, or a composition derived therefrom, during sowing. In a further embodiment of seed treatment or soil treatment according to the invention, the furrows are treated with the inventive formulation or preparation, or a composition derived therefrom, either before or after sowing of the seed.

In a preferred embodiment of the invention, the inventive formulations or preparations are used for the protection of seeds, seedlings' roots or shoots, preferably seeds.

The seeds which have been treated in accordance with the invention are distinguished by advantageous properties in comparison with conventionally treated seeds and therefore also form part of the subject matter of the present application. The seeds treated this way comprise the inventive formulation generally in an amount of from 0.1 g to 10 kg per 100 kg of seed, preferably 0.1 g to 1 kg per 100 kg of seed.

The following examples further illustrate the present invention:

### Examples

### Starting Materials:

- Insecticide A:: pyripyropene derivative of the formula I.
- Solvent A:: aromatic hydrocarbon solvent - Aromatic^{®} 200 ND (ExxonMobil).
- Adjuvant A:: alkoxylated fatty alcohol - Plurafac® LF 1300 (BASF), liquid at room temperature, wetting power by immersion: >300 s (according to DIN 1772 at 1 g/L in 2 g/l sodium carbonate at 23°C), water content 5-10 wt%, surface tension: ca. 32 mN/m (according to DIN 14370 at 1 g/L at 23°C).
- Anionic Surfactant A:: dodecylbenzenesulfonate (an anionic surfactant) - Witconate™ P-1220EH (AkzoNobel).
- Anionic Surfactant B:: dodecylbenzenesulfonate (an anionic surfactant) - Calsogen® EH (from Clariant).
- Non-ionic Surfactant A:: ethoxylated castor oil (a non-ionic surfactant S) - Emulpon™ CO-550 (from AkzoNobel).
- Non-ionic Surfactant B:: ethoxylated castor oil (a non-ionic surfactant S) - Wettol® EM31 (BASF).
- Block Copolymer A:: n-butoxylated propylene oxide/ethylene oxide block copolymer (Non-ionic block copolymer P) with an HLB value of 17 - Atlas G 5000 (Croda).
- pH Adjuster A:: N, N, N', N'-tetrakis (2-hydroxypropyl) ethylene-diamine - Quadrol® (BASF).

### Example 1 (Comparative):

A solution of Insecticide A (pyripyropene derivative I) in Solvent A was prepared by slowly adding 4.98 parts by weight of Insecticide A to well agitated 63.92 parts by weight of Solvent A at room temperature. It typically took 1 to 3 hours for complete dissolution depending on the addition rate of Insecticide A and on the mode of agitation. After the agitation had been continued for additional approximately 12 hours the clear solution started to turn cloudy, indicating the precipitation of Solvent A solvate crystals of Insecticide A. Microscopy analysis confirmed that the precipitation was indeed crystalline.

### Example 2:

Four solutions of 2-heptanone in Solvent A were prepared by mixing 1 part by weight of 2-heptanone with 2, 4, 6 and 8 parts by weight, respectively, of solvent A. Then Insecticide A was dissolved in each of these solutions by slowly adding 4.98 parts by weight of Insecticide A to well agitated 63.92 parts by weight of the respective solution at room temperature. It typically took 1 to 3 hours for complete dissolution. After Insecticide A was fully dissolved, each of the four samples was seeded with the Solvent A solvate crystals of Insecticide A prepared in Example 1. Then the four samples were kept at 22°C for one month and afterwards were visually inspected for solvate crystal growth. In the samples with 2-heptanone to Solvent A ratios of 1:2 and 1:4 no crystal growth was observed, whereas crystal growth was detected in the samples with ratios of 1:6 and 1:8.

### Formulation Examples:

### Examples 3 and 4:

The Formulation Examples 3 and 4 according to the invention are listed in Table 1. Table 1 shows the ingredients and their amounts used for preparing these formulations. The preparations were carried out at room temperature as follows:

The indicated anionic surfactant and non-ionic surfactant were initially mixed with either Solvent A or a mixture of Solvent A and 2-heptonone in a container with stirring. After complete dissolution of both surfactants the Insecticide A was slowly added with good agitation. The agitation was continued till a clear solution was obtained. Afterwards the remaining ingredients, the Adjuvant A, the Block Copolymer A and the pH Adjuster A were added to the solution with stirring until a homogeneous solution was formed.

**Table 1: Formulation examples (the numeric values are proportions in wt%)**

| Example | 3 | 4 |
|---|---|---|
| Insecticide A | 4.98 | 4.98 |
| Solvent A | 63.92 | 45.92 |
| 2-heptanone | - | 18 |
| Anionic Surfactant A | 6 | - |
| Anionic Surfactant B | - | 6 |
| Non-ionic Surfactant A | 4 | - |
| Non-ionic Surfactant B | - | 4 |
| Adjuvant A | 19.9 | 19.9 |
| Block Copolymer A | 1 | 1 |
| pH Adjuster A | 0.2 | 0.2 |
| total | 100 | 100 |

### II. Stability tests of the formulations

The storage stability of the Formulation Example 3 was examined by seeding three samples of the formulation with Solvent A solvate crystals of Insecticide A prepared in Example 1, and then keeping one sample at room temperature (22°C), another one at -20°C and subjecting the third sample to temperatures cycling between -10°C and 10°C every 48 hours. After storing the sample this way for one month little solvate crystal growth was only observed in the sample stored at 22°C. The other two samples did not show any crystal growth.

The storage stability of the Formulation Example 4 was examined by seeding three samples of the formulation with both, powdered Insecticide A and Solvent A solvate crystals of Insecticide A prepared in Example 1, and then keeping one sample at room temperature (22°C), another one at -20°C and subjecting the third sample to temperatures cycling between -10°C and 10°C every 48 hours. After storing the sample this way for one month crystal growth could not be detected in any one of the three samples.

The results of the stability test demonstrate that the inventive formulations comprising a non-ionic surfactant S are already fairly stable upon storage at different temperature regimes. However, the formulations of the invention that in addition also comprise a C₆-C₁₀-ketone were shown to have an even higher stability as no tendency to solvate crystal growth could be observed even after prolonged storage periods at room temperature, very low temperature (-20°C) or temperatures cycling between -10°C and 10°C.

## Claims

1. A liquid concentrate formulation, which comprises
a) 0.5 to 30 wt%, based on the total weight of the formulation, of a compound of formula I; 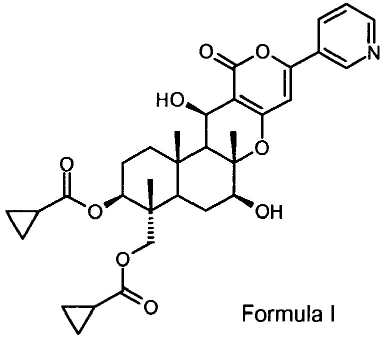
b) 20 to 80 wt%, based on the total weight of the formulation, of an aromatic hydrocarbon solvent or aromatic hydrocarbon solvent mixture,
c) 10 to 50 wt%, based on the total weight of the formulation, of at least one alkoxylated aliphatic alcohol of formula (A)
R^{a} -O-(CₘH₂ₘO)ₓ-(CₙH₂ₙO)_{y}-(CₚH₂ₚO)_{z}-R^{b} (A)
in which
R^{a} represents C₈-C₃₆-alkyl, C₈-C₃₆-alkenyl or a mixture thereof;
R^{b} represents H or C₁-C₁₂-alkyl;
m, n, p represent, independently of one another, an integer from 2 to 16;
x, y, z represent, independently of one another, a number from 0 to 50; and
x+y+z corresponds to a value from 2 to 50,
further comprising
d) at least one anionic surfactant, and
e) at least one non-ionic surfactant S which is selected from the group consisting of C₂-C₃-polyalkoxylates of C₁₀-C₂₂-hydroxy fatty acid triglycerides and C₂-C₃-polyalkoxylates of C₁₀-C₂₂-fatty acid mono- or diglycerides.

2. The formulation according to claim 1, wherein the non-ionic surfactant S is selected from the group consisting of polyethoxylates of C₁₂-C₂₂-hydroxyfatty acid triglycerides and polyethoxylates of C₁₂-C₂₂-fatty acid mono- or diglycerides.

3. The formulation according to claim 1, wherein the non-ionic surfactant S is castor oil ethoxylate.

4. The formulation according to any one of claims 1 to 3 where the average degree of alkoxylation in the non-ionic surfactant S is from 20 to 70.

5. The formulation according to any one of the preceding claims, wherein the anionic surfactant is selected from the group consisting of C₁-C₂₂-alkylarylsulfonates, sulfates of ethoxylated C₄-C₂₂-alkylphenols, phosphates of ethoxylated C₄-C₂₂-alkylphenols, phosphates of ethoxylated polyarylphenols and sulfates of ethoxylated polyarylphenols.

6. The formulation according to claim 6, wherein the anionic surfactant is selected from the group consisting of C₈-C₂₀-alkylbenzene sulfonates.

7. The formulation according to any one of the preceding claims, wherein formula meets at least one of the following provisos:
- R^{a} in formula (A) represents a linear C₁₄-C₃₆-alkyl, C₁₄-C₃₆-alkenyl, or a mixture thereof;
- the variables m, n, p in formula (A) represent, independently of one another, an integer from 2 to 5;
- the sum x+y+z of the variables x, y and z in formula (A) corresponds to a value from 5 to 50, in particular 10 to 30.

8. The formulation according to any one of the preceding claims, further comprising a ketone having from 6 to 10 carbon atoms.

9. The formulation according to any one of the preceding claims, further comprising at least one non-ionic block copolymer P comprising at least one polyethylene oxide moiety PEO and at least one polyether moiety PAO consisting of repeating units derived from C₃-C₆-alkylene oxides and/or styrene oxide, where the block copolymer P does not have alkyl or alkenyl groups with more than 6 carbon atoms.

10. The formulation according to any one of the preceding claims, further comprising at least one pH adjuster, which is an organic amine containing at least one tertiary amino group.

11. The formulation according to any one of the preceding claims, which comprises
a) 1 to 10 wt%, based on the total weight of the formulation, of the compound of formula I,
b) 30 to 70 wt%, based on the total weight of the formulation, of an aromatic hydrocarbon solvent or aromatic hydrocarbon solvent mixture,
c) 10 to 40 wt%, based on the total weight of the formulation, of at the least one alkoxylated aliphatic alcohol of the formula (A),
d) 1 to 10 wt%, based on the total weight of the formulation, of the at least one anionic surfactant,
e) 1 to 10 wt%, based on the total weight of the formulation, of the at least one non-ionic surfactant S,
f) optionally 5 to 30 wt%, based on the total weight of the formulation, of the at least one a ketone having from 6 to 10 carbon atoms, and
g) optionally 0.5 to 10 wt%, based on the total weight of the formulation, at least one non-ionic block copolymer P comprising at least one polyethylene oxide moiety PEO and at least one polyether moiety PAO consisting of repeating units derived from C₃-C₆-alkylene oxides and/or styrene oxide, where the block copolymer P does not have alkyl or alkenyl groups with more than 6 carbon atoms,
where the total amount of components a), b), c), d), e) and, if present, components f) and g) add up to at least 90 wt% of the total amount of the formulation.

12. The formulation according to any one of the preceding claims, which is a nonaqueous formulation.

13. An aqueous ready-to-use preparation obtained by diluting the formulation according to any one of the preceding claims with water.

14. A method for protecting plants from attack or infestation by invertebrate pests comprising contacting the plant, or the soil or water in which the plant is growing, with a formulation according to any one of claims 1 to 12 or with a ready-to-use preparation according to claim 13 in pesticidally effective amounts.

15. A method for protection of plant propagation material against invertebrate pests comprising contacting the plant propagation material with a formulation according to any one of claims 1 to 12 or with a ready-to-use preparation according to claim 13 in pesticidally effective amounts.

16. Seed, comprising the formulation according to any one of claims 1 to 12.

17. Non-therapeutic use of a formulation according to any one of claims 1 to 12 or a ready-to-use preparation according to claim 13 for combating or controlling invertebrate pests.

18. Use of a formulation according to any one of claims 1 to 12 or a ready-to-use preparation according to claim 13 for protecting growing plants from attack or infestation by invertebrate pests.

## Patentansprüche

1. Flüssigkonzentratformulierung, die Folgendes umfasst:
a) 0,5 bis 30 Gew.-% in Bezug auf das Gesamtgewicht der Formulierung einer Verbindung der Formel I; 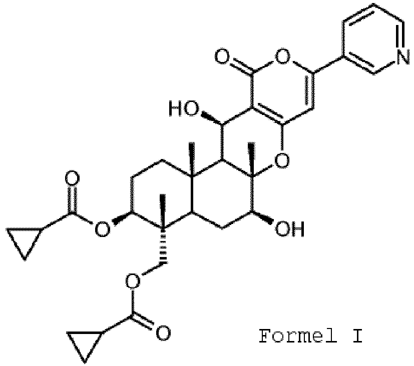
b) 20 bis 80 Gew.-% in Bezug auf das Gesamtgewicht der Formulierung, eines Aromatischer-Kohlenwasserstoff-Lösungsmittels oder Aromatischer- Kohlenwasserstoff-Lösungsmittelgemischs,
c) 10 bis 50 Gew.-% in Bezug auf das Gesamtgewicht der Formulierung mindestens eines alkoxylierten aliphatischen Alkohols der Formel (A)
R^{a}-O-(CₘH₂ₘO)ₓ-(CₙH₂ₙO)_{y}-(CₚH₂ₚO)_{z}-R^{b} (A)
worin
R^{a} C₈-C₃₆-Alkyl, C₈-C₃₆-Alkenyl oder eine Mischung davon bedeutet;
R^{b} H oder C₁-C₁₂-Alkyl bedeutet;
m, n, p unabhängig voneinander eine ganze Zahl von 2 bis 16 bedeuten;
x, y, z unabhängig voneinander eine Zahl von 0 bis 50 bedeuten; und
x+y+z einem Wert von 2 bis 50 entspricht,
ferner umfassend
d) mindestens ein anionisches Tensid und
e) mindestens ein nichtionisches Tensid S, das aus der Gruppe bestehend aus C₂-C₃-Polyalkoxylaten von C₁₀-C₂₂-Hydroxyfettsäuretriglyceriden und C₂-C₃-Polyalkoxylaten von C₁₀-C₂₂-Fettsäuremono- oder -diglyceriden ausgewählt ist.

2. Formulierung nach Anspruch 1, wobei das nichtionische Tensid S aus der Gruppe bestehend aus Polyethoxylaten von C₁₂-C₂₂-Hydroxyfettsäuretriglyceriden und Polyethoxylaten von C₁₂-C₂₂-Fettsäuremono- oder -diglyceriden ausgewählt ist.

3. Formulierung nach Anspruch 1, wobei es sich bei dem nichtionischen Tensid S um Ricinusölethoxylat handelt.

4. Formulierung nach einem der Ansprüche 1 bis 3, wobei der mittlere Alkoxylierungsgrad im nichtionischen Tensid S bei 20 bis 70 liegt.

5. Formulierung nach einem der vorhergehenden Ansprüche, wobei das anionische Tensid aus der Gruppe bestehend aus C₁-C₂₂-Alkylarylsulfonaten, Sulfaten ethoxylierter C₄-C₂₂-Alkylphenole, Phosphaten ethoxylierter C₄-C₂₂-Alkylphenole, Phosphaten ethoxylierter Polyarylphenole und Sulfaten ethoxylierter Polyarylphenole ausgewählt ist.

6. Formulierung nach Anspruch 6, wobei das anionische Tensid aus der Gruppe bestehend aus C₈-C₂₀-Alkylbenzolsulfonaten ausgewählt ist.

7. Formulierung nach einem der vorhergehenden Ansprüche, wobei Formel mindestens eine der folgenden Maßgaben erfüllt:
- R^{a} in Formel (A) bedeutet ein geradkettiges C₁₄-C₃₆-Alkyl, C₁₄-C₃₆-Alkenyl oder eine Mischung davon;
- die Variablen m, n, p in Formel (A) bedeuten unabhängig voneinander eine ganze Zahl von 2 bis 5;
- die Summe x+y+z der Variablen x, y und z in Formel (A) entspricht einem Wert von 5 bis 50, insbesondere 10 bis 30.

8. Formulierung nach einem der vorhergehenden Ansprüche, ferner umfassend ein Keton mit 6 bis 10 Kohlenstoffatomen.

9. Formulierung nach einem der vorhergehenden Ansprüche, ferner umfassend mindestens ein nichtionisches Blockcopolymer P, das mindestens eine Polyethylenoxideinheit PEO und mindestens eine Polyethereinheit PAO, die aus von C₃-C₆-Alkylenoxiden und/oder Styrenoxid abgeleiteten Wiederholungseinheiten besteht, umfasst, wobei das Blockcopolymer P keine Alkyl- oder Alkenylgruppen mit mehr als 6 Kohlenstoffatomen aufweist.

10. Formulierung nach einem der vorhergehenden Ansprüche, ferner umfassend mindestens ein Mittel zur pH-Einstellung, bei dem es sich um ein organisches Amin mit mindestens einer tertiären Aminogruppe handelt.

11. Formulierung nach einem der vorhergehenden Ansprüche, die Folgendes umfasst:
a) 1 bis 10 Gew.-% in Bezug auf das Gesamtgewicht der Formulierung Verbindung der Formel I;
b) 30 bis 70 Gew.-% in Bezug auf das Gesamtgewicht der Formulierung, eines Aromatischer-Kohlenwasserstoff-Lösungsmittels oder Aromatischer- Kohlenwasserstoff-Lösungsmittelgemischs,
c) 10 bis 40 Gew.-% in Bezug auf das Gesamtgewicht der Formulierung des mindestens einen alkoxylierten aliphatischen Alkohols der Formel (A) ;
d) 1 bis 10 Gew.-% in Bezug auf das Gesamtgewicht der Formulierung des mindestens einen anionischen Tensids,
e) 1 bis 10 Gew.-% in Bezug auf das Gesamtgewicht der Formulierung des mindestens einen nichtionischen Tensids S,
f) gegebenenfalls 5 bis 30 Gew.-% in Bezug auf das Gesamtgewicht der Formulierung des mindestens einen Ketons mit 6 bis 10 Kohlenstoffatomen und
g) gegebenenfalls 0,5 bis 10 Gew.-%, in Bezug auf das Gesamtgewicht der Formulierung, mindestens ein nichtionisches Blockcopolymer P, das mindestens eine Polyethylenoxideinheit PEO und mindestens eine Polyethereinheit PAO, die aus von C₃-C₆-Alkylenoxiden und/oder Styrenoxid abgeleiteten Wiederholungseinheiten besteht, umfasst, wobei das Blockcopolymer P keine Alkyl- oder Alkenylgruppen mit mehr als 6 Kohlenstoffatomen aufweist,
wobei die Gesamtmenge der Komponenten a), b), c), d), e) und, falls vorhanden, der Komponenten f) und g) zusammen mindestens 90 Gew.-% der Gesamtmenge der Formulierung ausmacht.

12. Formulierung nach einem der vorhergehenden Ansprüche, bei der es sich um eine nichtwässrige Formulierung handelt.

13. Wässriges gebrauchsfähiges Präparat, das durch Verdünnen der Formulierung nach einem der vorhergehenden Ansprüche mit Wasser erhalten wird.

14. Verfahren zum Schützen von Pflanzen gegen Befall oder Verseuchung durch wirbellose Schädlinge, bei dem man die Pflanze, oder den Boden oder das Wasser, worin die Pflanze wächst, mit einer Formulierung nach einem der Ansprüche 1 bis 12 oder mit einem gebrauchsfertigen Präparat nach Anspruch 13 in pestizid wirksamen Mengen in Kontakt bringt.

15. Verfahren zum Schützen von pflanzlichem Vermehrungsgut gegen wirbellose Schädlinge, bei dem man das pflanzliche Vermehrungsgut mit einer Formulierung nach einem der Ansprüche 1 bis 12 oder mit einem gebrauchsfertigen Präparat nach Anspruch 13 in pestizid wirksamen Mengen in Kontakt bringt.

16. Saatgut, das die Formulierung nach einem der Ansprüche 1 bis 12 umfasst.

17. Nichttherapeutische Verwendung einer Formulierung nach einem der Ansprüche 1 bis 12 oder eines gebrauchsfertigen Präparats nach Anspruch 13 zum Bekämpfen oder Kontrollieren von wirbellosen Schädlingen.

18. Verwendung einer Formulierung nach einem der Ansprüche 1 bis 12 oder eines gebrauchsfertigen Präparats nach Anspruch 13 zum Schützen von wachsenden Pflanzen vor Befall oder Verseuchung durch wirbellose Schädlinge.

## Revendications

1. Formulation de concentré liquide, qui comprend
a) 0,5 à 30 % en poids, par rapport au poids total de la formulation, d'un composé de formule I : 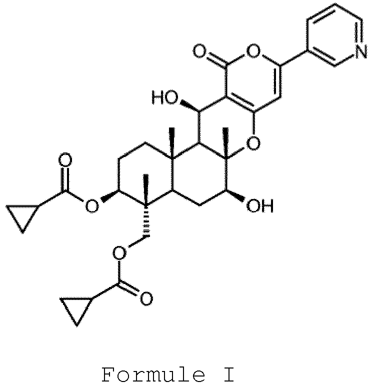
b) 20 à 80 % en poids, par rapport au poids total de la formulation, d'un solvant hydrocarboné aromatique ou d'un mélange de solvants hydrocarbonés aromatiques,
c) 10 à 50 % en poids, par rapport au poids total de la formulation, d'au moins un alcool aliphatique alcoxylé de formule (A)
R^{a} -O-(CₘH₂ₘO)ₓ-(CₙH₂ₙO)_{y}-(CₚH₂ₚO)_{z}-R^{b} (A)
dans laquelle
R₃ représente un groupe alkyle en C₈-C₃₆, alcényle en C₈-C₃₆ ou un mélange de ceux-ci ;
R^{b} représente H ou un groupe alkyle en C₁-C₁₂;
m, n, p représentent chacun indépendamment des autres un entier de 2 à 16 ;
x, y, z représentent chacun indépendamment des autres un nombre de 0 à 50 ; et
x+y+z correspond à une valeur de 2 à 50, comprenant en outre
d) au moins un tensioactif anionique, et
e) au moins un tensioactif non-ionique S, qui est choisi dans le groupe consistant en les triglycérides d'acides gras hydroxylés en C₁₀-C₂₂ polyalcoxylés en C₂-C₃ et les mono- et diglycérides d'acides gras en C₁₀-C₂₂ polyalcoxylés en C₂-C₃.

2. Formulation selon la revendication 1, dans laquelle le tensioactif non-ionique S est choisi dans le groupe consistant en les triglycérides d'acides gras hydroxylés en C₁₂-C₂₂ polyéthoxylés et les mono- ou diglycérides d'acides gras en C₁₂-C₂₂ polyéthoxylés.

3. Formulation selon la revendication 1, dans laquelle le tensioactif non-ionique S est un produit d'éthoxylation de l'huile de ricin.

4. Formulation selon l'une quelconque des revendications 1 à 3, dans laquelle le degré moyen d'alcoxylation du tensioactif non-ionique S est de 20 à 70.

5. Formulation selon l'une quelconque des revendications précédentes, dans laquelle le tensioactif anionique est choisi dans le groupe consistant en les (alkyle en C₁-C₂₂)arylsulfonates, les sulfates d'(alkyle en C₄-C₂₂)phénols éthoxylés, les phosphates d'(alkyle en C₄-C₂₂)phénols éthoxylés, les phosphates de polyarylphénols éthoxylés et les sulfates de polyarylphénols éthoxylés.

6. Formulation selon la revendication 6, dans laquelle le tensioactif anionique est choisi dans le groupe consistant en les (alkyle en C₈-C₂₀)benzènesulfonates.

7. Formulation selon l'une quelconque des revendications précédentes, dans laquelle la formule satisfait à au moins l'une des conditions suivantes :
- R^{a}, dans la formule (A), représente un groupe alkyle en C₁₄-C₃₆ à chaîne droite, alcényle en C₁₄-C₃₆ à chaîne droite, ou un mélange de ceux-ci ;
- les variables m, n, p dans la formule (A) représentent chacune indépendamment des autres un entier de 2 à 5 ;
- la somme x+y+z des variables x, y et z, dans la formule (A), correspond à une valeur de 5 à 50, en particulier de 10 à 30.

8. Formulation selon l'une quelconque des revendications précédentes, comprenant en outre une cétone ayant de 6 à 10 atomes de carbone.

9. Formulation selon l'une quelconque des revendications précédentes, comprenant en outre au moins un copolymère à blocs non-ioniques P comprenant au moins un fragment poly(oxyde d'éthylène) PEO et au moins un fragment polyéther PAO consistant en des motifs répétitifs dérivant d'oxydes d'alkylène en C₃-C₆ et/ou d'oxyde de styrène, le copolymère à blocs P n'ayant pas de groupes alkyle ou alcényle ayant plus de 6 atomes de carbone.

10. Formulation selon l'une quelconque des revendications précédentes, comprenant en outre au moins un agent d'ajustement du pH, qui est une amine organique contenant au moins un groupe amino tertiaire.

11. Formulation selon l'une quelconque des revendications précédentes, qui comprend :
a) 1 à 10 % en poids, par rapport au poids total de la formulation, du composé de formule I ;
b) 30 à 70 % en poids, par rapport au poids total de la formulation, d'un solvant hydrocarboné aromatique ou d'un mélange de solvants hydrocarbonés aromatiques,
c) 10 à 40 % en poids, par rapport au poids total de la formulation, de l'au moins un alcool aliphatique alcoxylé de formule (A) ;
d) 1 à 10 % en poids, par rapport au poids total de la formulation, de l'au moins un tensioactif anionique ;
e) 1 à 10 % en poids, par rapport au poids total de la formulation, de l'au moins un tensioactif non-ionique S ;
f) en option, 5 à 30 % en poids, par rapport au poids total de la formulation, de la ou des cétones ayant de 6 à 10 atomes de carbone, et
g) en option 0,5 à 10 % en poids, par rapport au poids total de la formulation, d'au moins un copolymère à blocs non-ioniques P comprenant au moins un fragment poly(oxyde d'éthylène) POE et au moins un fragment polyéther POA consistant en des motifs répétitifs dérivant d'oxydes d'alkylène en C₃-C₆ et/ou d'oxyde de styrène, le copolymère à blocs P n'ayant pas de groupes alkyle ou alcényle ayant plus de 6 atomes de carbone,
les quantités combinées des composants a), b), c), d), e) et, s'ils sont présents, des composants f) et g), s'additionnant à au moins 90 % en poids de la quantité totale de la formulation.

12. Formulation selon l'une quelconque des revendications précédentes, qui est une formulation non-aqueuse.

13. Préparation aqueuse prête à l'emploi, obtenue par dilution à l'eau de la formulation selon l'une quelconque des revendications précédentes.

14. Procédé pour la protection de plantes vis-à-vis d'une attaque ou d'une infestation par des ravageurs invertébrés, consistant à mettre en contact la plante, ou le sol ou l'eau dans lequel la plante croît, avec une formulation selon l'une quelconque des revendications 1 à 12 ou avec une préparation prête à l'emploi selon la revendication 13, en des quantités à effet pesticide.

15. Procédé de protection d'un matériel de propagation de plantes vis-à-vis de ravageurs invertébrés, comprenant la mise en contact du matériel de propagation de plantes avec une formulation selon l'une quelconque des revendications 1 à 12 ou avec une préparation prête à l'emploi selon la revendication 13, en des quantités à effet pesticide.

16. Graine comprenant la formulation selon l'une quelconque des revendications 1 à 12.

17. Utilisation non-thérapeutique d'une formulation selon l'une quelconque des revendications 1 à 12 ou d'une préparation prête à l'emploi selon la revendication 13 pour combattre ou maîtriser les ravageurs invertébrés.

18. Utilisation d'une formulation selon l'une quelconque des revendications 1 à 12 ou d'une préparation prête à l'emploi selon la revendication 13 pour protéger les plantes en cours de croissance vis-à-vis d'une attaque ou d'une infestation par des ravageurs invertébrés.
